(19) Europäisches Patentamt / European Patent Office / Office européen des brevets

(11) **EP 2 062 111 B1**

(12) **FASCICULE DE BREVET EUROPEEN**

(45) Date de publication et mention de la délivrance du brevet:
**07.04.2010 Bulletin 2010/14**

(21) Numéro de dépôt: **00922712.5**

(22) Date de dépôt: **21.04.2000**

(51) Int Cl.:
***G06F 1/00*** (2006.01)

(86) Numéro de dépôt international:
**PCT/FR2000/001059**

(87) Numéro de publication internationale:
**WO 2000/065418 (02.11.2000 Gazette 2000/44)**

(54) **PROCEDE ET AUTOMATISME DE REGULATION D'UNE PRODUCTION INDUSTRIELLE ETAGEE AVEC MAITRISE D'UN STRESS ENCHAINE ALEATOIRE, APPLICATION AU CONTROLE DU BRUIT ET DU RISQUE VaR D'UNE CHAMBRE DE COMPENSATION**

VERFAHREN UND AUTOMATISIERUNGSGERÄT ZUR REGELUNG EINER STUFENFÖRMIGEN INDUSTRIELLEN FERTIGUNG MIT UMFASSENDER KONTROLLE ÜBER ZUFÄLLIG MITEINANDER VERKETTETE BELASTUNG, ANWENDUNG ZUR STEUERUNG DES RAUSCHENS UND DAS VAR-RISIKO EINES KOMPENSATIONSRAUMS

METHOD AND AUTOMATIC CONTROL FOR REGULATING A MULTIPLE-STAGE INDUSTRIAL PRODUCTION CONTROLLING RANDOM CHAINED STRESS, APPLICATION TO NOISE AND VALUE AT RISK CONTROL OF A CLEARING HOUSE

(84) Etats contractants désignés:
**AT BE CH CY DE DK ES FI FR GB GR IE IT LI LU MC NL PT SE**

(30) Priorité: **21.04.1999 FR 9905074**

(43) Date de publication de la demande:
**27.05.2009 Bulletin 2009/22**

(73) Titulaires:
- **Billiotte, Jean-Marie**
  **92200 Neuilly sur Seine (FR)**
- **Adlerberg, Ingmar**
  **75003 Paris (FR)**
- **Douady, Raphael**
  **75005 Paris (FR)**
- **Kovalenko, Ivan**
  **117526 Moscou (RU)**
- **Durand, Philippe**
  **75017 Paris (FR)**
- **Casanova, Jean-Francois**
  **75007 Paris (FR)**
- **Frignet, Jean-Philippe**
  **75016 Paris (FR)**
- **Basset, Frédéric**
  **29 Ennismore Gardens**
  **London SW7 1AJ (GB)**

(72) Inventeurs:
- **Billiotte, Jean-Marie**
  **92200 Neuilly sur Seine (FR)**
- **Adlerberg, Ingmar**
  **75003 Paris (FR)**
- **Douady, Raphael**
  **75005 Paris (FR)**
- **Kovalenko, Ivan**
  **117526 Moscou (RU)**
- **Durand, Philippe**
  **75017 Paris (FR)**
- **Casanova, Jean-Francois**
  **75007 Paris (FR)**
- **Frignet, Jean-Philippe**
  **75016 Paris (FR)**
- **Basset, Frédéric**
  **29 Ennismore Gardens**
  **London SW7 1AJ (GB)**

(74) Mandataire: **Warusfel, Bertrand**
**SELARL FELTESSE WARUSFEL PASQUIER & ASSOCIES**
**15 boulevard du Palais**
**75004 Paris (FR)**

(56) Documents cités:
**WO-A-94/20912      WO-A-97/07475**
**WO-A-98/54666      US-A- 5 148 365**

- SLY DAVID P.: "MATERIAL FLOW ANALYSIS OF AUTOMOTIVE ASSEMBLY PLANTS USING FACTORYFLOW" WINTER SIMULATION CONFERENCE PROCEEDINGS,US,NEW YORK, IEEE, 1995, pages 902-908, XP000631990 ISBN: 0-7803-3018-8

- YOONHO SEO ET AL: "CONFIGURATION AND OPERATION OF A PULL-TYPE FLEXIBLE MANUFACTURING SYSTEM" MANUFACTURING REVIEW,US,AMERICAN SOCIETY OF MECHANICAL ENGINEERS, NEW YORK, vol. 4, no. 1, 1 March 1991 (1991-03-01), pages 44-52, XP000204977 ISSN: 0896-1611

**Description**

## DOMAINE TECHNIQUE DE L'INVENTION

La présente invention concerne un procédé et un dispositif (automatisme) de régulation et/ou de prévention de rupture d'un flux *F* de production industrielle multi-étagée et multi-liaison du type visant :

- à optimiser le flux de production *F(r)* en agissant sur un paramètre d'action industrielle *(r)*,
- tout en maîtrisant un impact industriel *I(r)* aléatoire résultant d'un stress enchaîné aléatoire aux différents étages de la production ;
- cet enchaînement de stress étant lui-même la conséquence d'un facteur environnemental d'aléa de production *X*.

L'invention s'applique avantageusement dans les cas où il faut:

- optimiser le couple (flux de production *F(r)*, impact industriel aléatoire *I(r)*),
- en réglant le paramètre d'action industrielle (r), et
- en tenant compte de critères notamment réglementaires ou de limite de rupture imposant des limites à cet impact *I(r)*.

Par le terme production industrielle (ou production) on entend, selon l'invention, toute activité humaine ayant pour objet la production d'une valeur ajoutée (flux de production) - ou exprimable directement ou indirectement en terme de valeur ajoutée -, que celle-ci soit liée à l'industrie manufacturière, énergétique, agro-alimentaire ou financière ...

Par flux de production *F(r)*, on entend, selon l'invention, tout transfert de matière ou grandeur mesurable émise à l'étage final $E_n$ et provenant de l'enchaînement des activités de production des sous-ensembles de production $S_{ij}$ aux différents étages $E_i$ du cycle de production.

L'invention concerne les domaines aussi bien industriels, manufacturiers et financiers, où il convient d'estimer, afin de le circonscrire, un impact aléatoire *I(r)*, qui peut être de type soit manufacturier (nuisance), soit financier (risque de perte et/ou de faillite), et qui est lié à l'exercice d'une production de valeur ajoutée (production manufacturière ou financière). Le but global recherché vise à optimiser le flux de la production de valeur ajoutée tout en limitant un impact aléatoire négatif lié à cette production. Cet impact aléatoire *I(r)* se trouve généralement croître avec le volume de cette production de valeur ajoutée.

L'invention est mise en oeuvre spécifiquement dans le cas d'une production à configuration multi-étagée et multi-liaison. La structure de cette production peut être soit arborescente, soit, dans le cas plus général, matricielle.

## EXPOSE DE L'INVENTION

L'invention consiste à réguler la production selon un procédé de type automatisme probabiliste à boucle d'action et boucle de réaction. Industriellement, cet automatisme de régulation peut être réalisé électroniquement à l'aide d'un calculateur programmé et câblé pour effectuer les étapes du procédé selon l'invention, telles que décrites plus loin. Les sorties du calculateur sont alors transmises à un système d'asservissement ou servomoteur agissant sur le paramètre d'action industrielle *(r)* pour lui attribuer sa valeur optimale.

Selon l'invention, la boucle d'action de l'automatisme est constituée d'un simulateur d'évaluation probabiliste inductive de l'enchaînement des stress aléatoires dans la chaîne de production aboutissant à une mesure probabiliste de l'impact *I(r)* industriel résultant, ce en fonction du niveau " réglable " du paramètre d'action industrielle *(r)*. La méthode mise en oeuvre par l'invention, au sein de la boucle d'action de l'automatisme, est généralement appelée " Value at Risk " ou "VaR". La méthode VaR est actuellement utilisée principalement dans le domaine financier, en vue d'appréhender les risques quantifiables des marchés (volatilité de la valeur d'un portefeuille de titres), ainsi que les risques de crédit et de liquidité dans les établissements financiers.

La boucle d'action de l'automatisme probabiliste de contrôle de production de l'invention mesure en fonction des valeurs possibles du paramètre d'action industrielle *(r)*, la " Value at Risk " (VaR) du flux de production *F(r)*, ce pour une durée *T* et un niveau de probabilité *(p)*. C'est-à-dire que la boucle d'action mesure l'estimateur d'effet constitué par la grandeur notée *VaR(p,T)(r)*, tel que l'impact *I(r)* subi par la production pendant l'horizon de temps *T* = [0,t] ne dépassera VaR qu'avec une probabilité *(p)* ; ce, en tenant compte des variations aléatoires des sous-aléas extérieurs $X_i$ influençant la production.

Au sein de la boucle de réaction de l'automatisme probabiliste de contrôle de production de l'invention, on règle au cours du temps *(t)* le niveau du paramètre d'action industrielle *(r)* à la valeur extrémale multi-variée $(r_{max})$ ou $(r_{min})$, en maintenant ledit estimateur d'effet *VaR(p,T)(r)* en deçà de son niveau de nuisance autorisé *M*. C'est-à-dire que dans le cas général, où le paramètre d'action $r = (r_l,...,r_h,...r_n)$, le niveau de nuisance autorisé $M = (M_l,...,M_h,,...,M_n)$ et la probabilité de fiabilité $(p) = (p_l,...,p_h,...p_n)$ sont multi-variés, on extrémise (r) afin que néanmoins pour chaque

indice $h$ :

- $VaRh(p_h,T)(r_{max}$ ou $r_{min}) < M_h$ (type 1 - Minimisation de l'effet induit -), ou
- $VaR_h(p_h,T)(r_{max}$ ou $r_{min}) > M_h$ (type 2 - Maximisation de l'effet induit -).

Ceci a pour but de rendre extrémal le niveau de production industrielle $F(r)$ à un niveau néanmoins compatible avec le respect de ladite condition réglementaire de contrôle de nuisance $Prob[I_h(X,T)(r) < M_h] \geq p_h$ (type 1), ou $Prob[I_h(X,T)(r) > M_h] \geq p_h$ (type 2). C'est-à-dire que, pour chaque indice $h$, l'effet induit $I_h$ reste inférieur (type 1) ou supérieur (type 2) au niveau autorisé $M_h$ avec la fiabilité probable $p_h$.

## ETAT DE LA TECHIQUE ANTERIEURE PAR RAPPORT A L'INVENTION

Selon l'art antérieur, il existe trois techniques classiques d'estimation de la répartition de probabilité de l'impact industriel aléatoire $I(r)$ selon une méthode VaR. Par souci de simplification, on se place ci-après dans le cadre de l'application financière (la plus fréquente selon l'art antérieur) de mesure du risque d'un portefeuille d'actifs financiers et notamment d'un portefeuille de titres (volatilité de sa valeur globale) lié aux aléas de marché. En effet, les applications aux industries manufacturières des méthodes VaR, bien que parfaitement viables, sont actuellement essentiellement prônées au niveau académique. Dans le cadre de cette application financière, on entend par " Value at Risk " d'un portefeuille pour une durée $T$ et un niveau de probabilité p, le montant, noté VaR tel que la perte encourue sur ce portefeuille pendant l'horizon de temps $T = [0,t]$ ne dépassera VaR qu'avec une probabilité égale à (1-$p$). C'est-à-dire que formellement : Prob[perte sur portefeuille > VaR] = 1-$p$, cette probabilité étant calculée selon une distribution supposée des sous-aléas extérieurs $X_i$ (volatilité des cours du marché) influençant le portefeuille.

➢ La première méthode d'estimation de la VaR est dite de la *matrice des variances-covariances estimées,* initialement développée par la compagnie JP Morgan (voir JP Morgan, RiskMetrics™ - Technical documents, 4th ed., Morgan Guaranty Trust Company, New York, 1996). Cette méthode est quasiment non applicable et/ou très imprécise dans le cas d'application à des actifs complexes (volatilité implicite des options).
➢ La seconde méthode d'estimation de la VaR, dite par *analyse historique,* a été initialement prônée par la compagnie Chase Manhattan, avec les systèmes Charisma™ et Risk$™. (voir CHASE MANHATTAN BANK N.A, Value at Risk, 1996). Elle repose sur l'hypothèse de stationnarité des facteurs de risque. Outre le fait qu'elle présuppose que l'avenir a un comportement statistique identique au passé - et plus précisément, au passé récent - elle a une forte tendance à mal évaluer la fréquence des événements catastrophiques. De plus, la méthode par VaR historique ne peut techniquement pas simuler le défaut total d'un étage du processus de risque.
➢ La troisième méthode d'estimation de la VaR, dite par *simulation de Monte-Carlo,* a été prônée initialement par la compagnie Bankers Trusts, avec son système RAROC 2020™.

On trouvera une description générale de ces trois méthodes dans :

- "Value at Risk " de Esh, Kieffer et Lopez parue aux éditions DeBoeck ;
- " Mastering Value at Risk " parue aux éditions Pitman Publishing ;
- " The Practice of Risk Management" par Litterman et Gimerlock, aux éditions Euromoney Books, New York, 1998 ;
- " Value at Risk : the New Benchmark for controlling Market Risk " aux éditions Professional, 1997.

Dans la boucle d'action de son automatisme probabiliste, l'invention mesure l'impact industriel aléatoire $I(r)$ résultant des stress enchaînés aléatoires dans les sous-systèmes de production $S_{ij}$ aux différents étages de la production, selon la troisième méthode, c'est-à-dire par Simulation de Monte-Carlo.

Les systèmes de détermination de l'impact final probabiliste (VaR) dans un système productif (notamment financier) prônés par l'art antérieur :

- soit concernent une production de type non multi-étagée et/ou non multi-liaison, c'est-à-dire qu'ils ne s'appliquent pas au domaine technique de l'invention, et ne mettent de surcroît pas en oeuvre les particularités de l'invention,
- soit lorsque leur application est multi-étagée et multi-liaison, ils ne mettent pas en oeuvre une méthode probabiliste inductive du calcul enchaîné des stress aux différents étages de production, c'est-à-dire qu'ils ne mettent pas en oeuvre les caractéristiques de l'invention.

Si l'on se réfère au domaine de la maîtrise des risques de portefeuilles financiers et de l'optimisation d'activité d'une chambre de compensation (application du type potentiellement multi-étagée et multi-liaison dans l'industrie de la finance), où les aléas $X_i$ sont constitués par les variations des cours des titres ; où l'impact $I(r)$ est constitué par la perte potentielle globale de la chambre de compensation ; où les stress $W_{ij}$ sont constitués successivement : des pertes des clients des adhérents ou filiales (étage $E_{i-1}$), puis des pertes adhérents (étage $E_i$); et/ou le paramètre multivarié *(r)* d'action est constitué par les dépôts de garantie $r_i$ des adhérents auprès de la chambre de compensation :

- un système mono-étagé ou non multi-liaison étudie le risque I de défaut global de la chambre de compensation en prenant en compte le risque de chaque contrepartie (agent de change ou adhérent), soit sur un étage ;
- un système du type selon l'invention s'applique lui à une chambre de compensation multi-étagée et multi-liaison, c'est-à-dire prenant en compte plusieurs étages de remontée des défauts : l'étage initial des clients d'un adhérent, ou des filiales ; puis l'étage des adhérents (agents de change) eux-mêmes...

Les systèmes de l'art antérieur, soit sont mono-étagés et ne considèrent que les comptes adhérents, soit sont multi-étagés mais n'effectuent qu'une simple fusion des comptes adhérents et clients dans leur calcul de probabilité. En d'autre terme, les systèmes de l'art antérieur qui considèrent une structure arborescente de contreparties (constituée de sous-ensembles productifs répartis en étages) se contentent de calculer le défaut simultané de chaque branche de "l'arbre". Alors que l'invention mesure l'enchaînement probabiliste inductif des défauts dans les branches de " l'arbre " avec calcul probabiliste à chacun des niveaux. Plus généralement, les systèmes de l'art antérieur, contrairement à l'invention, ne prennent pas en compte la mesure de l'enchaînement probabiliste " catastrophique "des stress au niveau de plusieurs étages de production.

Les systèmes de l'art antérieur les plus voisins de l'invention se trouvent dans le domaine de l'analyse des VaR par méthode électronique dans le domaine boursier (banques, sociétés financières, ...). On peut citer, comme les plus proches du procédé de l'invention, les systèmes développés par les sociétés et promoteurs suivants :

☐ Algorithmics™ de Ron Dembo

Ce système effectue une simulation du portefeuille dans un premier Monte-Carlo réduit, puis un calcul d'un portefeuille simplifié ayant un comportement similaire. Ensuite il effectue une simulation du portefeuille simplifié dans un Monte-Carlo plus complet. Ce système peut regarder le portefeuille global des encours avec une contrepartie et étudier la VaR de ce portefeuille (ce qu'on appelle la " Credit VaR ") en fonction des mouvements de marché, qui prennent en compte des mouvements catastrophiques (déterministes et affectés d'une probabilité). Les probabilités de.défaut retenues à chacun des " étages " viennent des agences de notation S&P™ ou de Moody's™, donc sont fixées, ne sont pas déterminées de manière probabiliste et ne dépendent pas des mouvements de marché. Les " Credit VaR " de plusieurs contreparties sont additionnées, pas fusionnées par méthode inductive d'enchaînement probabiliste des défauts.

☐ CreditRisk+™ de Mark Holmes

Ce système multi-étagé préconise la prise en compte d'une probabilité de défaut pour les sous-systèmes d'un étage, qui n'est pas fixe. Mais le processus retenu est un processus aléatoire. C'est-à-dire que les probabilités de défaut des sous-systèmes productifs $S_{ij}$ ne dépendent pas des stress agrégés $W_{z,i,j}$ qu'ils subissent (ni indirectement des aléas $X$ et, dans ce cas particulier, pas des mouvements de marché). Ils ne sont notamment pas plus élevés lorsque les stress agrégés $W_{z,i,j}$ sont plus importants.

Ce système propose de combiner les défauts possibles des différentes contreparties pour calculer l'efficacité de diversification du portefeuille. Mais il ne propose pas de mesure probabiliste de défaut aux différents étages et d'enchaînement des défauts entre étages par méthode inductive.

☐ CATS/Carma™ de Robert Geske

Ce système préconise un tirage Monte-Carlo multi-période, des mouvements du marché, puis du passage des contreparties d'une classe de " rating " à l'autre, enfin du défaut éventuel. Le calcul de la VaR de crédit s'effectue sur chaque contrepartie avec répartition selon les échéances. Ce système ne préconise ni l'agrégation du risque de défaut de contrepartie par méthode probabiliste inductive, ni les probabilités de défaut dépendant de l'état de stress (mouvement de marché).

Les systèmes proposés dans le domaine de la finance par les sociétés Algorithmics™, Credit Risk+™ et CATS™, par opposition aux autres systèmes plus courants de l'art antérieur, se rapportent à une structure d'enchaînement de stress en " arbre " des différentes contreparties. C'est en ce sens qu'ils peuvent être considérés comme les plus proches des enseignements de l'invention. Mais contrairement à l'invention, cette structure particulière n'est pas mise à profit pour aboutir à une mesure plus précise de l'impact probabiliste I.

Ainsi, selon l'art antérieur, on ne pas tient compte du fait que la non maîtrise du stress a un étage antérieur, c'est-à-dire, dans cette application financière de mesure du risque de portefeuille, que le défaut d'un client rend plus fragile la position de son compensateur, c'est-à-dire augmente le stress à l'étage suivant. En d'autres termes, selon l'art antérieur, on ne simule pas le défaut des différents sous-systèmes par méthode probabiliste inductive d'étage en étage. C'est-à-dire que l'art antérieur ne simule pas le défaut du système à l'étage 1 le plus bas, et ne reporte pas ce défaut au niveau de l'étage 2, avant de simuler de manière probabiliste le défaut des sous-systèmes de l'étage 2, et ainsi de suite.

De même, pour les systèmes de l'art antérieur et notamment pour Algorithmics™ et CATS™, la probabilité de défaut d'un sous-système (contrepartie) est fixe. Alors que, comme le portefeuille étudié contient des options, le montant à payer par la contrepartie à une date donnée peut changer d'un tirage Monte-Carlo à l'autre (c'est d'ailleurs la raison pour laquelle les options sont considérées de manière académique comme " actifs contingents "). Pour Credit Risk+™, le portefeuille ne contient que des obligations. Donc le montant à payer par la contrepartie à une date donnée est connu. Les obligations ne sont pas des actifs contingents, (sauf si elles sont à taux variables ou ont des clauses de convertibilité ou de rappel). La probabilité de défaut selon Credit Risk+™ résulte d'un tirage aléatoire. Mais le tirage et la valeur de la probabilité qui en résultent sont indépendants de l'état du marché dans la " trajectoire " Monte-Carlo où l'on se trouve. Par opposition, selon la première variante recommandée et décrite plus loin de mise en oeuvre de l'invention, la distribution de probabilité du coefficient de défaut d'un sous-système $S_{ij}$ n'est ni constante ni aléatoire, elle dépend de l'état de stress du sous-système $S_{ij}$, donc de l'état du marché. Par contre, une fois cette distribution connue, la valeur de ce coefficient est aléatoire, bien entendu, selon cette distribution.

De plus, selon l'art antérieur, et contrairement aux recommandations de la seconde variante recommandée et décrite plus loin de mise en oeuvre de l'invention, les systèmes de l'art antérieur considèrent que la fiabilité des émetteurs est donnée par leur " rating " Moody's™ ou S&P™. Les systèmes de l'art antérieur ne font pas intervenir de façon séparée la qualité de l'émetteur et sa taille. Selon la logique mise en oeuvre par les systèmes les plus évolués de l'art antérieur, la seule façon de prendre en considération la taille d'un émetteur consiste à considérer que celui qui est petit mais fiable, a une probabilité de défaut très faible pour un petit montant, mais qui augmente brusquement à partir d'un certain montant, alors que celui qui est gros mais instable a une probabilité de défaut du même ordre de grandeur pour un petit montant et un gros montant. Pour la majorité des systèmes de l'art antérieur, la probabilité de défaut est considérée comme indépendante du montant à payer, donc cette distinction serait sans objet.

Enfin contrairement aux recommandations de la troisième variante recommandée et décrite plus loin de mise en oeuvre de l'invention, l'art antérieur ne propose pas d'implémenter, dans la simulation probabiliste mise en oeuvre, des scénarios catastrophes aléatoires, avec des probabilités données. L'art antérieur propose en général d'effectuer des " stress test" dont le but est d'étudier les conséquences d'un mouvement catastrophique comme un "krach" boursier. Pour ce faire, il recommande de simuler un scénario catastrophe dont tous les paramètres sont introduits par l'utilisateur, sans aléa dans ces paramètres. Certains phénomènes de compensation (" hedging ") peuvent alors passer inaperçus, ce qui ne sera pas le cas si le " stress test " est lui-même aléatoire (tel que selon l'invention).

Les systèmes suivants de l'art antérieur sont très éloignés des spécifications de l'invention par la méthode de mesure de l'impact qu'ils mettent en oeuvre:

☐ Credit Metrics™ et Risk Metrics™ de J.P. Morgan™
Ces systèmes fonctionnent contrepartie par contrepartie selon la méthode de la matrice de covariance, avec des probabilités de défaut indépendantes du mouvement de marché et fournies sur Internet. Ces systèmes ne préconisent donc pas les moyens caractéristiques de l'invention.

☐ Credit Risk " Boundary Rider "™ de Steve Davis
Ce système dit " close-out netting module " calcule l'engagement sur chacune des contreparties, en tenant compte d'une structure arborescente des contreparties. L'engagement à un niveau de 1'" arbre " engendre le " netting " de toute la branche qu'il porte. Ce système ne préconise ni l'agrégation du risque de défaut de contrepartie par méthode probabiliste inductive, ni les probabilités de défaut dépendant des mouvements de marché. Ce système ne préconise donc pas les moyens caractéristiques de l'invention.

☐ Hedge™ de Richard Sandor
Ce système effectue un tirage Monte-Carlo des mouvements du marché, puis un calcul de l'effet sur les portefeuilles et enfin un tirage du défaut par contrepartie indépendant du mouvement du marché et un calcul de VaR globale. Ce système ne préconise donc pas les moyens caractéristiques de l'invention.

☐ KMV" EDF "™ d'Oltech Vasicek
Ce système est basé sur une chaîne de " Markov ". Il évalue par une méthode Monte-Carlo multi-période, l'espérance du retour sur un titre. Ce système ne prend en compte que des prêts ou des obligations et calcule le risque portant sur l'émetteur. Ce système évalue le risque contrepartie par contrepartie. Les probabilités de défaut des sous-systèmes sont fixes. Ce système ne préconise ni l'agrégation du risque des défauts de contreparties par méthode probabiliste inductive, ni les probabilités de défaut dépendant de l'état de stress (mouvements de marché). Ce système ne préconise donc pas les moyens caractéristiques de l'invention.

☐ Midas Kapiti™ de Misys (UK)

Ce système ne préconise ni l'agrégation du risque des défauts de contreparties par méthode probabiliste inductive, ni les probabilités de défaut dépendant de l'état de stress (mouvements de marché). Ce système ne préconise donc pas les moyens caractéristiques de l'invention.

☐ NetRisk™ de Eugene Shanks

Ce système ne préconise ni l'agrégation du risque des défauts de contreparties par méthode probabiliste inductive, ni les probabilités de défaut dépendant de l'état de stress (mouvements de marché). Ce système ne préconise donc pas les moyens caractéristiques de l'invention.

Les systèmes suivants de l'art antérieur sont plus éloignés des spécifications de l'invention par le fait qu'ils ne s'intéressent pas au " netting " de contrepartie (agrégation de stress) :

☐ FEA™ de Mark Garman
☐ FNX™ de Farid Naib
☐ Lombard Risk™ de John Wisbey
☐ RAROC 2020™ de Bankers Trust
☐ Summit™ de Jean de Fontenay
☐ Zoologic™ de Kenneth Garbade
☐ Open Link™ de Coleman Fung

## APPLICATIONS INDUSTRIELLES DE L'INVENTION

L'objet de l'invention (procédé et automatisme probabiliste de contrôle de flux à stress enchaîné aléatoire) telle qu'elle est décrite ci-après peut être utilisé dans de nombreuses industries aussi bien manufacturières, financières, qu'agricoles. On décrit ci-après l'invention, tout d'abord dans sa définition et caractérisation globale, c'est-à-dire applicable notamment à l'ensemble des types de productions manufacturières et financières à stress enchaînés. Puis on décrit l'invention plus spécifiquement pour une de ses applications industrielles manufacturières (optimisation de la production d'une usine avec limitation du bruit). Enfin, on décrit l'invention pour une application particulièrement avantageuse dans l'industrie de la finance, visant à l'optimisation du niveau d'activité d'une chambre de compensation — bourse de " valeurs mobilières " ou matières premières — exposée aux risques de défaut de ses contreparties (liés à la volatilité des marchés de valeurs) et devant respecter des critères de limitation de risque global — " Capital adequacy " — afin de minimiser le risque de faillite.

En dehors des applications industrielles décrites ci-après, l'homme de l'art pourra aisément appliquer les principes de l'invention dans de nombreux autres domaines industriels multi-étagés soumis à des aléas enchaînés, et notamment pour le contrôle des flux de production d'énergie en fonction des aléas de consommation, de disponibilité de matière énergétique, des limites instantanées de capacité de production (locales ou globales) et des capacités de transmission d'énergie d'un réseau ; ce en respectant des contraintes minimale notamment de disponibilité à chaque utilisateur et/ou de contraintes réglementaires de limitation de la pollution (air, température de l'eau de refroidissement, ...) et en évitant que certains circuits disjonctent.

Le procédé et le dispositif de l'invention peuvent également être mis en oeuvre pour la mesure et le contrôle des risques opérationnels industriels enchaînés, notamment dans les industries dont le fonctionnement engendre certaines nuisances comme le bruit ou la pollution ; ainsi que dans les systèmes industriels complexes à enchaînement catastrophique de risques telles les centrales nucléaires ; les plate-forme de forage (gaz et pétrole) et les usines chimiques...

Les dispositions de l'invention peuvent aussi être avantageusement mises en oeuvre dans le domaine de l'agriculture, en particulier pour le contrôle des cycles d'approvisionnement d'un pays ou d'une région en fonction des aléas aléatoires enchaînés de production (régionale ou mondiale) et des variations de consommation de nourriture, tout en assurant un apport minimal à chaque habitant.

## DESCRIPTION DE 3 MODES DE MISES EN OEUVRE INDUSTRIELLE DE L'INVENTION EN REFERENCE AUX DESSINS

Les dessins annexés illustrent le procédé et les caractéristiques de l'automatisme probabiliste de l'invention, ainsi que des trois variantes recommandées de mise en oeuvre et deux applications particulières.

Sur ces dessins :

- La figure 1 représente schématiquement l'organisation générale d'une unité de production industrielle pour laquelle la mise en oeuvre du procédé et dispositif de contrôle de production selon l'invention est recommandée.
- La figure 2 représente sous une forme générale les différentes étapes de mise en oeuvre du procédé de contrôle de production et les particularités de l'automatisme probabiliste de régulation selon l'invention.

- La figure 3 représente schématiquement, l'organisation d'une usine pour y mettre en oeuvre le procédé et le dispositif de contrôle selon l'invention, afin d'en optimiser la production, en contrôlant néanmoins que le bruit interne à l'usine est en dessous d'un niveau réglementaire.
- La figure 4 représente selon l'invention, les différentes étapes de mise en oeuvre du procédé et les particularités de l'automatisme de contrôle de production de l'usine et de réduction du bruit de la figure 3.
- La figure 5 représente schématiquement l'organisation d'une chambre de compensation (bourse) pour mettre en oeuvre le procédé et l'automatisme probabiliste de contrôle selon l'invention afin de maximiser le volume des transactions (et donc les frais de courtage encaissés) tout en maintenant le risque global de perte financière (liée au défaut d'adhérents) en deçà d'une limite réglementaire.
- La figure 6 représente les différentes étapes de mise en oeuvre du procédé et les particularités de l'automatisme probabiliste de contrôle de l'invention pour la chambre de compensation de la figure 5.

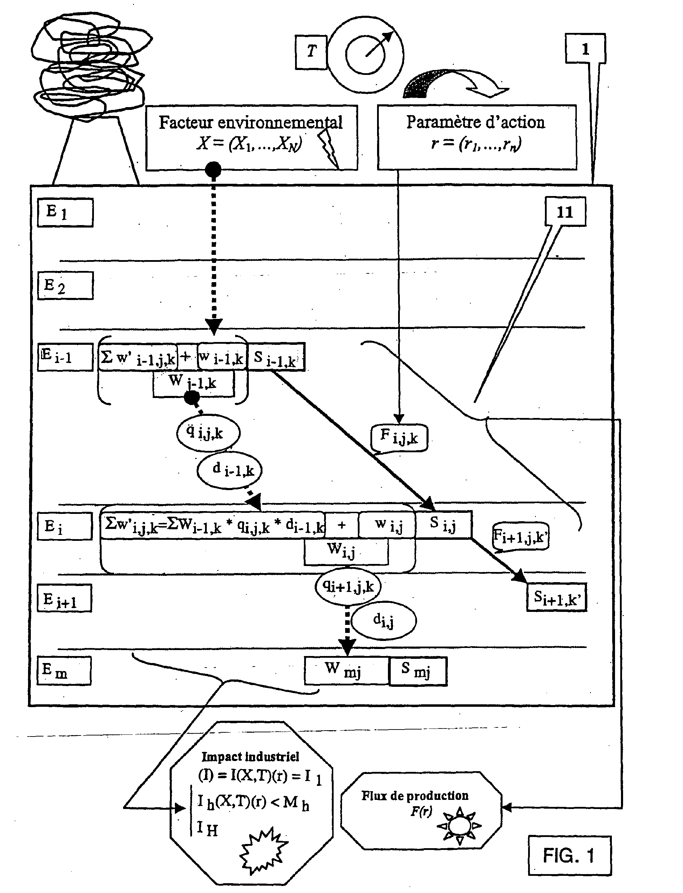

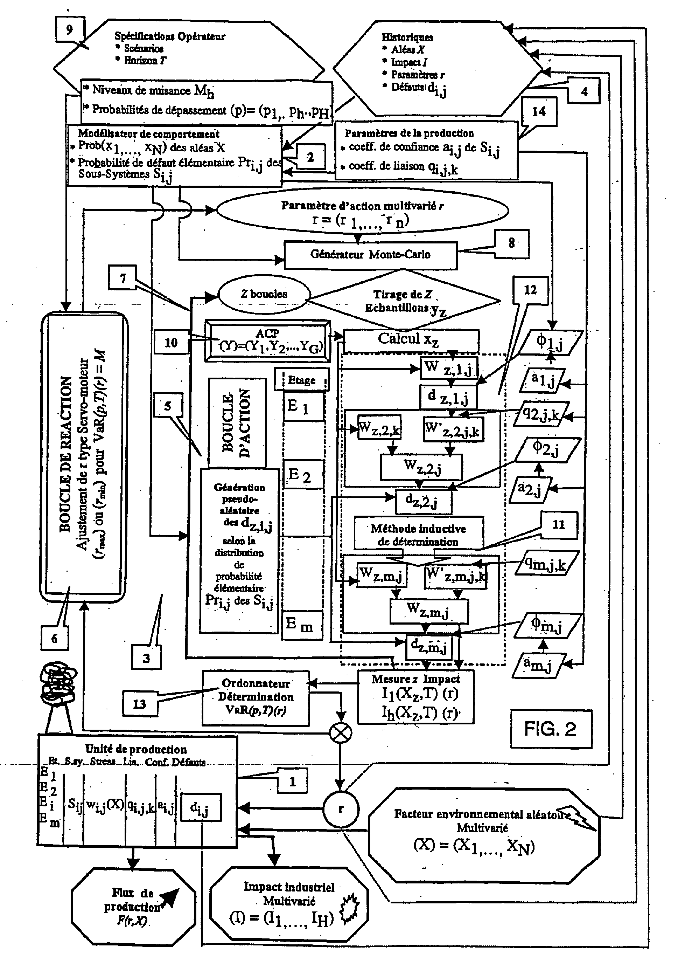

Les figures 1 et 2 décrivent la configuration générale d'un système de production (1) industriel ou financier pour permettre la mise en oeuvre du procédé et dispositif de l'invention.

Le procédé et l'automatisme (3) de régulation selon l'invention sont appliqués spécifiquement à une production multi-étagée et multi-liaison. C'est-à-dire qu'ils concernent un centre de production industriel ou financier (1) composé de plusieurs étages de production notés $E_l,...,E_m$, et dont chaque étage de production $E_i$ est lui-même composé de sous-systèmes productifs $S_{ij}$. Ceux-ci reçoivent un ou des sous-flux de production $F_{i,j,k}$ d'un ou plusieurs sous-systèmes $S_{i-1,k}$ de l'étage précédent $E_{i-1}$ (sauf le premier $i = 1$) et transmettent un ou des sous-flux de production $F_{i+1j,k}$, à un ou plusieurs sous-systèmes $S_{i+1,k}$ de l'étage suivant $E_{i+1}$ (sauf au dernier étage $i = m$).

L'invention concerne le cas où les sous-flux de production $F_{i,j,k}$ peuvent être contrôlés à l'aide d'un paramètre d'action industrielle *(r)* éventuellement multivarié (r) = $(r_1,...,r_n)$, et dont le flux de production industrielle (global) *F(r)* résulte de la combinaison des sous-flux de production $F_{i,j,k}$.

L'invention est spécifiquement appliquée à une production du type à stress enchaîné aléatoire $W_{ij}$ **aboutissant** à un impact industriel *I(X,T)(r)* (généralement nuisible), éventuellement multivarié *(I) = ($I_l,..,I_h,.,I_H$)*. Cet impact *I(X,T)(r)* doit être maîtrisé (notamment pour éviter des ruptures ou pour des raisons réglementaires) dans un horizon de temps *T*. Il est la résultante d'un enchaînement en cascade de stress agrégés $W_{ij}$ (phénomènes mesurables) subis par chacun des sous-systèmes productifs $S_{ij}$.

L'invention concerne spécifiquement les types de production dont l'impact industriel I(X,T)(r) dépend de manière globalement monotone (croissante ou décroissante) des stress agrégés $W_{ij}$ des sous-systèmes $S_{ij}$ aux différents étages de production $E_i$, et où une au moins des composantes élémentaires d'impact $I_h$ dépend :

a) des stress agrégés $W_{mj}$ des sous-systèmes $S_{mj}$ du dernier étage de production $E_m$,

aa) d'un facteur environnemental multivarié d'aléa de production *(X) = ($X_l,...,X_N$)*, chacun des $X_i$ étant appelé sous-facteur d'aléa de production,

aaa) de l'horizon de temps *T*,

aaaa) et de manière globalement monotone (croissante ou décroissante, dans le même sens que par rapport aux stress agrégés $W_{mj}$) du paramètre d'action industrielle *(r)* par l'intermédiaire des stress agrégés $W_{m,j}$.

Chaque stress agrégé aléatoire $W_{ij}$ (effet " catastrophique " local) subi par un sous-système $S_{ij}$ est en mode nominal, contenu au niveau du sous-système $S_{ij}$. Mais il peut, en mode défaut, être partiellement ou totalement transmis à l'étage suivant $E_{i+1}$. C'est-à-dire que formellement, chaque stress agrégé $W_{ij}$ est la résultante (somme) :

b) d'une part, d'un stress aléatoire $w_{ij}$ propre au sous-système productif $S_{ij}$ et dépendant — de manière connue et spécifique au sous-système — du facteur environnemental multivarié d'aléa de production *(X)* ainsi que de façon globalement monotone (croissante ou décroissante) du paramètre d'action industrielle *(r)*,

bb) d'autre part, du stress aléatoire transmis $w'_{i,j,k}$ provenant de la combinaison de défauts de certains des sous-systèmes productifs $S_{i-1,k}$ de l'étage précédent $E_{i-1}$, suite au stress qu'ils ont eux-mêmes subi.

Selon l'invention, chacun des stress transmis $w'_{ij,k}$ est exprimé comme la combinaison, (se matérialisant formellement sous la forme d'une somme (Σ) pour chacun des sous-systèmes de l'étage précédent des produits) :

c) du stress agrégé $W_{i-1,k}$ du sous-système $S_{i-1,k}$,

cc) d'un coefficient de liaison $q_{ij,k}$ constant, ou connu mais non aléatoire,

ccc) et d'un coefficient de **transmission** aléatoire $d_{i-l,k}$ du sous-système productif $S_{i-l,k}$, variant entre les limites 0 et 1 (appelé aussi coefficient de défaut).

En référence aux figures 1 et 2, on constate que l'invention est mise en oeuvre spécifiquement dans le cadre où la distribution de probabilité de défaut élémentaire $Pr_{ij}(X,T,r,W_{i,j},a_{ij})$ de chacun des sous-systèmes productifs $S_{ij}$ est connue. Elle est exprimée par un dispositif électronique modélisateur de comportement (2). Ce modélisateur de comportement (2) complémentant l'automate probabiliste (3) est interfacé avec l'opérateur de cet automatisme (3). Il fixe électroniquement les valeurs des probabilités de défaut élémentaire $Pr_{ij}$ et les fait dépendre :

**d)** du facteur multivarié X d'aléa de production,
**ddd)** de l'intervalle de temps $T$,
**dddd)** du paramètre d'action industrielle $r$,
**ddddd)** du stress $W_{ij}$,
**dddddd)** et d'un coefficient de confiance $a_{ij}$, éventuellement multi-valué, propre au sous-système productif $S_{ij}$ et dont les caractéristiques résultent notamment, mais pas exclusivement, d'une analyse historique du défaut des sous-systèmes productifs $S_{ij}$.

Ces coefficients de confiance $a_{i,j}$ ainsi que les coefficients de liaison $q_{ij,k}$ sont fixes et caractéristiques du centre de production (1) (Fig. 1 et 2). Plus précisément, ils peuvent varier au cours du temps mais sont introduits avant chaque lancement de la boucle de contrôle et restent fixes pendant l'exercice de la boucle de contrôle. Ils sont rentrés par l'opérateur à l'intérieur d'une zone mémoire (14) dite de paramètres de production de l'automatisme (3) (Fig. 2).
Comme cela apparaît figure 1, selon l'invention, la configuration multi-liaison (de l'enchaînement de stress) de la production peut être :

- soit *arborescente* - c'est-à-dire que pour chaque sous-système $S_{i-1,k}$ d'un étage $E_{i-1}$, un des coefficients de liaison $q_{i,j,k} = 1$ et les autres $q_{i,j',k}$ sont nuls ; ce qui correspond au cas où un sous-système productif de l'étage $E_{i-1}$ ne peut transmettre son stress $W_{i-1,k}$ qu'à un seul sous-système productif de l'étage suivant $E_i$ -,
- soit, dans le cas plus général, *matricielle,* et dans ce cas chaque coefficient de liaison $q_{i,j,k}$ peut prendre toute valeur.

Selon l'invention, lesdits coefficients de transmission $d_{ij}$ peuvent être :

- soit *binaires* - ils ne prennent que les valeurs 0 ou 1, c'est-à-dire qu'un sous-système productif $S_{ij}$ fait défaut ou ne fait pas défaut, mais il n'y a pas de défaut partiel - et, dans ce cas, la distribution de probabilité de défaut élémentaire $Pr_{ij}(X,T,r,W_{ij},a_{ij})$ de chaque sous-système productif $S_{ij}$ se réduit à un seul nombre $p_{ij}(X,T,r,W_{ij},a_{ij})$ qui est la probabilité que le défaut ait lieu (i.e. $d_{ij} = 1$)-;
- soit, dans le cas plus général, *quelconques,* - c'est-à-dire qu'ils peuvent prendre toute valeur entre 0 et 1, les transmissions partielles de stress sont possibles et la distribution de probabilité de défaut élémentaire $Pr_{ij}(X,T,r, W_{i,j}, a_{i,j})$ de chaque sous-système productif $S_{i,j}$ est une fonction positive définie sur l'intervalle [0,1] des valeurs possibles du coefficient de transmission - .

La prise en compte inductive - à l'intérieur du processeur probabiliste inductif (12) (Fig. 2, ainsi que la suite) dont il sera question plus loin -, de ces probabilités de défaut élémentaires $Pr_{ij}$ des sous-systèmes $S_{ij}$ d'un étage $E_i$ vers le suivant $E_{i+1}$ est une des particularités principales de l'invention.
Le procédé de contrôle de production selon l'invention est spécifiquement mis en oeuvre dans le cas où les variations, sur l'horizon de temps $T$, des sous-aléas $X_i$ constituant ledit facteur multivarié $X$ d'aléa d'environnement, sont quantifiables par une loi de probabilité jointe $Prob(x_1,...,x_N)$. Les $x_i$ constituent l'état générique que peut prendre le sous-aléa $X_i$ dont, en général, les caractéristiques, notamment de moyenne, de variance et de corrélations ainsi que de comportements extrêmes, résultent de l'analyse statistique d'un enregistrement historique des sous-aléas $X_i$.
En référence à la figure 2, on constate que le modélisateur de comportement (2) de l'automatisme (3) génère électroniquement la loi de probabilité conjointe $Prob(x_1,...,x_N)$ selon les enregistrements des historiques des sous-aléas stockés à l'intérieur de la zone mémoire auxiliaire (4) des historiques de l'automatisme (3) et la fournit au générateur Monte-Carlo (8) pour lui permettre d'effectuer des tirages d'échantillon $y_z$.
Comme cela apparaît figure 1, l'invention est enfin mise en oeuvre dans le cas où les composantes élémentaires d'impact $I_h(X,T)(r)$ dudit impact industriel $I(X,T)(r)$ du flux de production $F(r)$ ne doivent pas dépasser, soit vers le haut (type 1), soit vers le bas (type 2), des niveaux de nuisance $M_h$, ce avec une fiabilité industrielle probabiliste $Prob[I_h(X,T)(r) < M_h] > p_h$ (type 1), ou $Prob[I_h(X,T)(r) > M_h] > p_h$ (type 2). Lesdits niveaux de nuisance $M_h$ et les probabilités $p_h$ sont imposés notamment réglementairement ou par des impératifs de seuil de rupture et pris en compte dans une zone mémoire (9) dite de spécification opérateur, appartenant à l'automatisme (3).
Le procédé mis en oeuvre par le dispositif (automatisme) de contrôle (3) de l'invention est décrit en référence aux figures 1 et 2. Selon ce procédé, ce de manière connue, on effectue électroniquement un échantillonnage le plus fidèle possible, en fonction du paramètre d'action industrielle *(r)*, de l'intervalle de temps $T$ ; de l'état de la production $F$

*(r)* constitué :

**e)** des valeurs que peuvent prendre les sous-facteurs d'aléa $X_i$,
**ee)** des stress $W_{ij}$ des sous-systèmes productifs $S_{ij}$,
**eee)** de leurs coefficients de défaut $d_{ij}$,
**eeee)** des composantes élémentaires d'impact $I_h(X,T)(r)$,
**eeeee)** des sous-flux de production $F_{ij,k}(r)$,
**eeeeee)** et du flux de production $F(r)$.

La fonction de la boucle d'action (5) de l'automatisme (3) de contrôle de production est de calculer électroniquement, toujours pour l'horizon de temps *T*, et ce en fonction des valeurs possibles du niveau du paramètre d'action industrielle *(r)*, l'estimateur multivarié d'impact maximal $VaR(p,T)(r)$ avec un seuil de probabilité éventuellement multivarié $(p) = (p_1,..,p_h,.,p_H)$ imposé par les conditions inscrites dans la mémoire (9) des spécifications de l'opérateur.

Celui-ci est défini comme le vecteur VaR$(p,T)(r)$ des limites VaR$_h(P_h,T)(r)$ tel que lesdites composantes élémentaires d'impact $I_h(X,T)(r)$ ne franchiront (vers le haut ou vers le bas selon le type de système) qu'avec une probabilité $(1-p_h)$, c'est-à-dire Prob[$I_h(X,T)(r) > VaR_h(p_h,T)(r)$]= (1-$p_h$) (type 1) ou Prob[$I_h(X,T)(r) < VaR_h(p_h,T)(r)$] = (1-$p_h$) (type 2).

Selon ce cadre connu de mise en oeuvre de l'invention, on règle automatiquement au cours du temps, à l'intérieur de la boucle de réaction (6) de l'automatisme (3) de contrôle de production, le niveau du paramètre d'action industrielle *(r)* à la valeur extrémale multi-variée $(r_{max})$ ou $(r_{min})$ maintenant ledit estimateur d'effet VaR$(p,T)(r)$ en deçà de son niveau de nuisance autorisé *M*. C'est-à-dire que pour chaque composante h, la boucle de réaction (6) de l'automatisme (3) extrémise électroniquement $VaR_h(p_h,T)(r_{max}$ ou min$) < M_h$ (type 1), ou $VaR_h(p_h,T)(r_{max}$ ou $_{min}) > M_h$ (type 2). Ceci a pour but de rendre extrémal le niveau de production industrielle *F(r)* à un niveau néanmoins compatible avec le respect de ladite condition réglementaire de contrôle de nuisance Prob[$I_h(X,T)(r) > M_h$] $\geq p_h$ (type 1), Prob[$I_h(X,T)(r) < M_h$] $\geq p_h$ (type 2).

Le procédé de l'invention consiste en outre à effectuer l'échantillonnage de l'état de la production selon une méthode pseudo-aléatoire de type " Monte-Carlo ", dont le nombre global de tirages est *Z*. Ceci est réalisé par le générateur de Monte-Carlo (8).

Pour ce faire, le procédé de l'invention consiste généralement à mettre en oeuvre les étapes connues suivantes, ce électroniquement à l'intérieur du modélisateur (2) et de la boucle d'action (5) de l'automatisme (3) :

**f)** Faire, à l'aide du modélisateur électronique (2), le choix (validé par des tests statistiques classiques adéquats) d'un modèle de comportement simultané Prob$(x_i,...,x_N)$ des différents sous-facteurs d'aléa de production $(X_i)$, (il peut s'agir notamment de lois normales, log-normales, ou plus généralement d'une distribution des niveaux des sous-facteurs d'aléa de production $(X_i)$ justifiés à partir d'observations notamment historiques de ces aléas) et le transmettre à la boucle d'action (5).

**ff)** Subsidiairement (dans le but d'accélérer la rapidité de la boucle de tirage (7), et donc d'améliorer les performances et la fiabilité de l'automatisme de contrôle (3) en permettant de réduire l'horizon *T*), effectuer électroniquement à l'intérieur du processeur d'''' ACP '' (10) une analyse en composantes principales (ACP) des différents sous-facteurs d'aléa, c'est-à-dire à considérer les relations qui expriment le comportement de ces sous-facteurs d'aléa de production $(X_i)$ en fonction de facteurs communs d'aléas, indépendants entre eux, ce, sous la forme d'un facteur d'aléa indiciel multi-valué aléatoire d'environnement de production $(Y) = (Y_1, Y_2,..,Y_G)$, les $(Y_g)$ étant dits sous-facteurs communs d'aléa indiciel de production, avec généralement $G<<N$. Cette disposition n'est pas obligatoire.

**fff)** Puis, à partir d'une part dudit modèle de comportement Prob$(x_i,...,x_N)$ des différents sous-facteurs d'aléa de production $(X_i)$, et des paramètres de distribution des sous-facteurs d'aléa indiciel $(Y_i)$, à construire électroniquement selon la méthode de Monte-Carlo et ce grâce au générateur de Monte-Carlo (8) :

- soit un nombre Z d'échantillons pseudo-aléatoires de vecteurs d'état indiciel $x_z = (x_{z,1},x_{z,2},...,x_{z,N})$, $(z = 1,...,Z)$ de valeurs possibles desdits sous-facteurs communs d'aléa indiciel de production $(X_i)$, [Cette génération électronique est réalisée à partir de paramètres décrivant chacun desdits sous-facteurs d'aléa $X_i$ pris individuellement, mais aussi à partir des corrélations liant ceux-ci entre eux, notamment selon les méthodes de décomposition connues de Cholesky et des " valeurs singulières "] ;

- soit, lorsqu'on effectue l'ACP, un nombre **Z** d'échantillons pseudo-aléatoires de vecteurs d'état $y_z = (y_{z,1},y_{z,2},...,y_{z,G})$, $(z = 1,...,Z)$ de valeurs possibles desdits sous-facteurs d'aléa indiciel de production $(Y_g)$, puis à déterminer électroniquement, pour chaque échantillon pseudo-aléatoire dudit vecteur spécifique d'état $y_z$, la valeur correspondante du facteur d'aléa multivarié correspondant $x_z = (x_{z,1}, x_{z,2},..., x_{z,N})$, selon les coefficients de l'analyse en composante principale (ACP).

**ffff)** A déterminer électroniquement à l'intérieur du processeur probabiliste inductif (12), pour chaque échantillon pseudo-aléatoire dudit vecteur spécifique d'état indiciel $x_z$, et en fonction dudit paramètre d'action *(r)*, le niveau correspondant de l'impact industriel multi-valué $I(x_z,T)(r)$.

**fffff)** A l'intérieur de l'ordonnateur (13), à ordonner et regrouper électroniquement les *Z* résultats, et, pour chaque composante élémentaire d'impact $I_h$, à comptabiliser électroniquement pour chaque valeur *V* que peut atteindre la composante $I_h$ le nombre $Z_h(V)$ desdits échantillons électroniques pour lesquels ladite composante d'impact $I_h(x_z,T)$ *(r)* dépasse (vers le haut ou vers le bas, selon le type 1 ou 2 de production à contrôler) la valeur *V* et donc à calculer électroniquement la pseudo-probabilité $p'_h(V) = Z_h(V)/Z$ de dépassement de la valeur *V* par ladite composante d'impact $I_h$.

**ffffff)** A en déduire électroniquement les variations de $VaR_h(p_h,T)(r)$ pour $p_h$ imposé, et ce en fonction dudit paramètre d'action *(r)*, [définie par $Pr[I_h(X,T)(r) >$ (ou $<$) $VaR_h] = (1-p_h)$].

**fffffff)** A l'intérieur de la boucle de réaction (6), à déterminer la multivaleur extrémale, ($r_{max}$) ou *($r_{min}$)* selon le type de système, pour laquelle l'estimateur multi-valué $VaR(p,T)(r)$ vaut exactement la valeur réglementaire *M* et ajuster par un procédé de type asservissement ou servomoteur la valeur du paramètre d'action *(r)* à ce niveau (possiblement multiple).

Une caractéristique principale nouvelle du procédé et dispositif (automatisme) (3) de contrôle recommandé par l'invention consiste en ce que, pour générer électroniquement les composantes élémentaires d'impact $I_h(x_z,T)(r)$ correspondant à chaque échantillon de l'aléa $x_z$, on détermine électroniquement pour chaque échantillon pseudo-aléatoire dudit facteur d'aléa multivarié *($x_z$),* et ce en fonction du paramètre d'action industrielle (r), le niveau des stress agrégés $W_{z,i,j}$ de chacun des sous-systèmes productifs $S_{i,j}$ par une méthode probabiliste inductive (11) partant du premier étage $E_1$ vers le dernier $E_m$. C'est-à-dire que selon cette méthode principale de mise en oeuvre du procédé de l'invention, et à l'intérieur dudit processeur probabiliste inductif (12), en partant du premier étage $E_1$ de l'unité de production (1), et pour chaque parcours de la boucle de tirage (7), c'est-à-dire pour chaque tirage pseudo-aléatoire d'un échantillon $y_z = (y_{z,1}, y_{z,2},...,y_{z,G})$ de vecteur indiciel (lorsqu'on effectue l'ACP) ou pour chaque tirage d'échantillons pseudo-aléatoires de vecteurs d'état $x_z = (x_{z,1}, x_{z,2},...,x_{z,N})$, (lorsqu'on n'effectue pas l'ACP), effectué par le générateur de Monte-Carlo (8) :

**g)** On mesure tout d'abord le niveau dudit stress propre $w_{1j}(x_z)$ de chacun des sous-systèmes $S_{1,j}$ à l'étage $E_1$ de la production industrielle ; ceux-ci étant confondus avec le stress agrégé $W_{z,1j}$.

**gg)** Puis, on effectue électroniquement une génération pseudo-aléatoire dudit coefficient de défaut $d_{z,1,j}$ de chacun des sous-systèmes productifs $S_{1,j}$ de l'étage $E_1$, suivant ladite distribution de probabilité de défaut élémentaire $Pr_{1,j}$ $(x_z,T,r,W_{z,1j},a_{1,j})$ du sous-système productif $S_{ij}$, telle que fournie par le modélisateur (2). Pour ce faire, selon l'invention, on génère électroniquement au sein du processeur probabiliste inductif (12) un nombre pseudo-aléatoire $u_{z,1,j}$ dans l'intervalle [0,1], et on lui applique électroniquement la fonction de répartition inverse $\Phi_{1,j}(x_z,T,r,W_{z,1,j},a_{1,j})(u_{z,1,j})$ de la probabilité de défaut élémentaire $Pr_{1j}(x_z,T,r, W_{z,1,j},a_{1,j})$ du sous-système productif $S_{1,j}$.

**ggg)** On mesure le niveau dudit stress propre $w_{2,k}(x_z)$ de chacun des sous-systèmes $S_{2,k}$ à l'étage $E_2$ de la production industrielle ;

**gggg)** On évalue électroniquement ledit stress agrégé $W_{z,2,k}$ de chaque sous-système $S_{2,k}$ de l'étage $E_2$ par la formule : $W_{z,2,k} = w_{2,k}(x_z) + \Sigma_j w'_{z,2j,k} = w_{2,k}(x_z) + \Sigma_j W_{z,1j}(x_z) \times d_{z,1,j} \times q_{2,j,k}$

Au sein du processeur probabiliste inductif (12), on réitère de manière inductive (11) ces opérations (gg à gggg) de détermination probabiliste des stress agrégés $W_{i,j}$ d'étage en étage jusqu'à obtenir les stress agrégés $W_{z,m,j}$ *des* sous-systèmes productifs $S_{m,j}$ de l'étage $E_m$. On en déduit l'impact industriel multivarié $I(x_z,T)(r)$ lié à l'échantillon Monte-Carlo d'indice *z*.

Ce processus est répété suivant *(Z)* boucles du processeur probabiliste inductif (12).

Un des avantages du procédé et dispositif selon cette mise en oeuvre principale de l'invention est que pour chaque échantillon Monte-Carlo emboîté constitué du facteur d'aléa environnemental multivarié $x_z$ et de la " cascade probabiliste " des coefficients de défaut $d_{z,i,j}$ émis au sein du processeur probabiliste inductif (12) :

- On mesure l'impact industriel *I* en tenant compte conjointement de l'enchaînement en cascade des stress $W_{z,i,j}$ à chacun des étages de la production et du caractère aléatoire des coefficients de défaut $d_{z,i,j}$.
- On en retire une mesure plus précise (que les méthodes de l'art antérieur) de la probabilité de dépassement d'un niveau donné *V* de l'impact *I(r)* et, donc, de l'estimateur d'impact maximal *VaR(p,T)(r)*.

De telle manière que :

- Les fréquences effectives de dépassement des limites autorisées pour les composantes élémentaires d'impact $I_h$ mesurées par l'automate (3) selon l'invention sont plus proches des valeurs cibles $(1-p_h) / T$.
- Ceci permet de diminuer les marges de sécurité industrielle à appliquer au niveau de résistance *M*.

- Par voie de conséquence, cela permet d'augmenter le flux de production $F(r)$ respectant une réglementation donnée.

On constitue donc grâce à ce procédé de contrôle un automatisme industriel (3) de contrôle de production plus efficace.

Une première variante auxiliaire caractéristique de mise en oeuvre du procédé et dispositif de contrôle selon l'invention consiste en outre en ce que l'on impose électroniquement que les coefficients de défaut $d_{z,i,j}$ des sous-systèmes productifs $S_{i,j}$ soient plus élevés lorsque les stress agrégés $W_{z,i,j}$ sont plus importants. C'est-à-dire que dans la méthode mise en oeuvre par processeur probabiliste inductif (12), pour l'évaluation des transmissions de stress d'un étage vers l'étage supérieur, on prend en compte le fait que, dans la majorité des cas, les coefficients de défaut élevés apparaissent précisément lorsque le stress est important, entraînant une augmentation sensible du niveau moyen du stress transmis à l'étage supérieur et, par voie de conséquence, de la valeur de l'effet induit global.

Pour mettre en oeuvre cette variante avantageuse de l'invention, on impose au modélisateur (2) des règles de fonctionnement telles que, pour un seuil quelconque $d < 1$, il fixe électroniquement les lois de probabilité de défauts élémentaires $Pr_{i,j}$ de telle manière que $Pr_{i,j}(x_z,T,r,W_{z,i,j},a_{i,j})[d_{z,i,j} > d]$ croisse avec la valeur du stress agrégé $W_{z,i,j}$. Pour ce faire, au sein du modélisateur (2), on fixe électroniquement les paramètres de description de la fonction de répartition inverse $\Phi_{i,j}(x_2T,r,W_{z,i,j},a_{i,j})(u_{z,i,j})$ de manière qu'elle soit une fonction croissante du paramètre $W_{z,i,j}$, tous les autres paramètres et variables, y compris $u_{z,i,j}$, étant fixés.

Deux variantes pratiques de mise en oeuvre de cette particularité sont données plus loin en référence aux figures (3 et 4), puis aux figures (5 et 6). Selon cette première variante auxiliaire de l'invention, à chaque étage $E_i$ de la production, et pour un sous-système $S_{i,j}$ on induit une plus grande probabilité $d_{z,i,j}$ de transmission d'une proportion donnée du stress $W_{z,i,j}$ vers l'étage supérieur. On prend mieux en compte le fait que, dans la majorité des cas, les coefficients de défaut élevés apparaissent précisément lorsque le stress est important, entraînant une augmentation sensible du niveau moyen du stress transmis à l'étage supérieur et, par voie de conséquence, de la valeur de l'effet induit global.

Un des avantages du procédé et dispositif selon cette première variante auxiliaire de l'invention est que :

l'on corrige un des défauts des systèmes de contrôle classiques, qui en ne respectant pas ce procédé complémentaire, amènent à une sous-évaluation importante du nombre de cas où l'impact industriel dépasse la valeur limite autorisée $M$,

- l'on évite un des défauts associés de ces systèmes classiques qui, afin de respecter les normes industrielles, tendent à utiliser des marges de sécurité plus importantes et donc à réduire le flux de production.

Une deuxième variante auxiliaire caractéristique du procédé et dispositif de contrôle selon l'invention est mise en oeuvre préférentiellement pour une production du type à enchaînement de stress diversifié. C'est-à-dire une production dont les sous-systèmes productifs $S_{i,j}$ ont des caractéristiques de taille et de fiabilité qui sont indépendantes.

Dans ce cas, certains des sous-systèmes productifs $S_{i,j}$ peuvent être de petite taille, aussi bien en termes de sous-flux de production qu'en termes de stress propre, fiables à leur échelle, c'est-à-dire que leur coefficient de défaut pour un stress agrégé du même ordre de grandeur que leur stress propre sera faible en moyenne, mais tels qu'un stress agrégé important peut amener à un défaut presque certain. Alors que d'autres sous-systèmes productifs $S_{i,j}$ ont la propriété inverse. C'est-à-dire que leur sous-flux de production est élevé ainsi que leur stress propre. Leur coefficient de défaut a une moyenne élevée mais relativement stable même lorsque le stress agrégé est important.

Selon cette variante de l'invention, on fixe électroniquement au sein de la mémoire (14) de paramètres de production, les coefficients de confiance $a_{i,j}$ sous la forme d'une grandeur qui possède au moins deux composantes *indépendantes :*

- On lie électroniquement une première composante de coefficient de confiance $a_{i,j}$ à la *taille* du sous-système productif $S_{i,j}$ qu'il concerne.
- On lie électroniquement une seconde composante coefficient de confiance $a_{i,j}$ à la *fiabilité* du sous-système productif $S_{i,j}$ relativement à sa taille.

Deux variantes pratiques de mise en oeuvre de cette particularité sont données plus loin en référence aux figures (3 et 4), puis aux figures (5 et 6).

En sorte que l'on obtient une estimation plus fiable et précise de la réalité de l'enchaînement des défauts dans la production, ce qui permet une diminution des marges de sécurité et, par voie de conséquence, entraîne l'augmentation du flux de production $F(r)$. Cette variante s'avère particulièrement efficace lorsque le paramètre d'action $(r)$ est multivarié et chacune de ses composantes agit principalement au niveau d'un sous-système productif précis. Dans ce cas, il sera possible de contrôler individuellement les flux de chacun des sous-systèmes productifs et d'en optimiser l'importance en fonction de sa taille.

Une troisième variante auxiliaire caractéristique du procédé et dispositif de contrôle selon l'invention est appliquée spécifiquement à une production dont le facteur environnemental multivarié d'aléa de production $X$ est sujet, avec une faible probabilité, à des mouvements très importants et imprévisibles. Selon cette variante, (pour constituer électroniquement ledit échantillonnage de l'état de la production selon une méthode pseudo-aléatoire de type " Monte-Carlo ", dont le nombre global de tirages est $Z$), on procède électroniquement par une combinaison probabiliste historique et « catastrophique ».

On fait le choix (validé par des tests statistiques classiques adéquats) d'un modèle de comportement simultané des différents sous-facteurs d'aléa de production $(X_i)$, (il peut s'agir notamment de lois normales, log-normales ou, plus généralement, d'une distribution des niveaux des sous-facteurs d'aléa de production $(X_i)$ justifiés à partir d'observations notamment historiques de ces aléas). On affecte une sous-probabilité standard $P_s$ d'occurrence à ce modèle historique. Pour ce modèle historique, à l'aide du générateur de Monte-Carlo (8), on génère électroniquement $Z_s$ échantillons standard pseudo-aléatoires du vecteur d'état $x_z = (x_{z,1}, x_{z,2},..., x_{z,N})$, [pour $z = 1,...,Z_s$ valeurs possibles desdits sous-facteurs communs d'aléa indiciel de production $(X_i)$], et on affecte à chacun de ces $Z_s$ dits échantillons standard un poids dit standard $m_s = P_s / Z_s$.

On fait le choix d'une ou plusieurs dites situations catastrophiques des différents sous-facteurs d'aléa de production $(X_i)$, voire de sous-familles de situations catastrophiques dont on définit les caractéristiques de moyenne et de dispersion :

- soit dans l'absolu,
- soit par rapport aux caractéristiques de la distribution issues de l'analyse de l'enregistrement historique inclus dans la mémoire auxiliaire (4).

On affecte une sous-probabilité standard $P_c$ d'occurrence à ce modèle catastrophique. Pour ce modèle catastrophique, à l'aide du générateur de Monte-Carlo (8), on génère électroniquement $Z_c$ échantillons pseudo-aléatoires du vecteur d'état indiciel $x_z = (x_{z,1}, x_{z,2},..., x_{z,c})$, [pour $z = 1,...,Z_c$]-multi-valeurs possibles desdits sous-facteurs d'aléa de production $(X_i)$]. On affecte à chacun de ces $Z_c$ dits échantillons standard un poids dit catastrophique $m_c = P_c / Z_c$. Il peut y avoir plusieurs modèles catastrophiques, affectés de probabilités $P_{c1},...,P_{cn}$, pour lesquels on génèrera autant de sous-familles d'échantillons pseudo-aléatoires.

On détermine électroniquement, pour chacun des $Z = Z_s + Z_c$ (ou $Z = Z_s + Z_{cl} +...+ Z_{cn}$) échantillons pseudo-aléatoires dudit vecteur spécifique d'état $x_z$, et en fonction dudit paramètre d'action $(r)$, le niveau correspondant de l'impact industriel multi-valué $I(x_z,T)(r)$.

On ordonne et on regroupe électroniquement les Z résultats. Pour chaque composante élémentaire d'impact $I_h$, on comptabilise électroniquement, pour chaque valeur $V$ que peut atteindre la composante $I_h$, le poids $Z_{Ph}(V)$ desdits échantillons électroniques [somme des nombres des échantillons électroniques pour lesquels ladite composante d'impact $I_h(x_z,T)(r)$ dépasse (vers le haut ou vers le bas, selon le type 1 ou 2 de production à contrôler) la valeur $V$ multipliée par le poids $m_s$ ou $m_c$ associé)].

De ce fait, on calcule électroniquement la pseudo-probabilité $p'_h(V) = Z_{ph}(V) / Z$ de dépassement de la valeur $V$ par ladite composante d'impact $I_h$.

Puis, de manière classique :

- on en déduit électroniquement les variations de $VaR_h(p_{h,T})(r)$ pour $p_h$ imposé, et ce en fonction dudit paramètre d'action $(r)$, [définie par $Pr[I_h(X,T)(r) >$ (ou $<$) $VaR_h] = (1-p_h)$]
- on détermine la multivaleur extrémale, $(r_{max})$ ou $(r_{min})$ selon le type de système, pour laquelle l'estimateur multi-valué $VaR(p,T)(r)$ vaut exactement la valeur réglementaire ou de rupture $M$, et
- on ajuste par un procédé de type asservissement ou servomoteur la valeur du paramètre d'action $(r)$ à ce niveau (possiblement multiple).

En sorte que selon cette troisième variante de l'invention, on corrige les biais observés entre la distribution de probabilité réelle de l'aléa $(X_1,...,X_N)$ et celle des valeurs prises durant la période d'enregistrement historique des données caractéristiques des événements. Si certains événements (aux conséquences graves et dont la probabilité ne peut être négligée) ne se sont pas produits dans la période où cet historique a été enregistré, on impose néanmoins à l'automatisme (3) de contrôle de production d'en tenir compte. Si, par un phénomène de compensation, la simulation d'un événement catastrophique précis n'engendrait aucun impact industriel important, grâce à la simulation de sous-familles d'événements, on évite cette compensation fortuite et on met en relief le risque réel lié à la catastrophe.

Un des types d'application majeur de l'invention est de contrôler tout effet néfaste (tel que pollution, ...) d'un appareil productif à étages, dont chaque étage est à la fois susceptible de produire cet effet néfaste et de le transmettre à l'étage suivant, mais également a un pouvoir de le maîtriser à son niveau.

La structure multi-étagée à laquelle s'applique l'invention peut apparaître : soit dans l'appareil de production lui même, soit dans le processus de contrôle de l'effet néfaste.

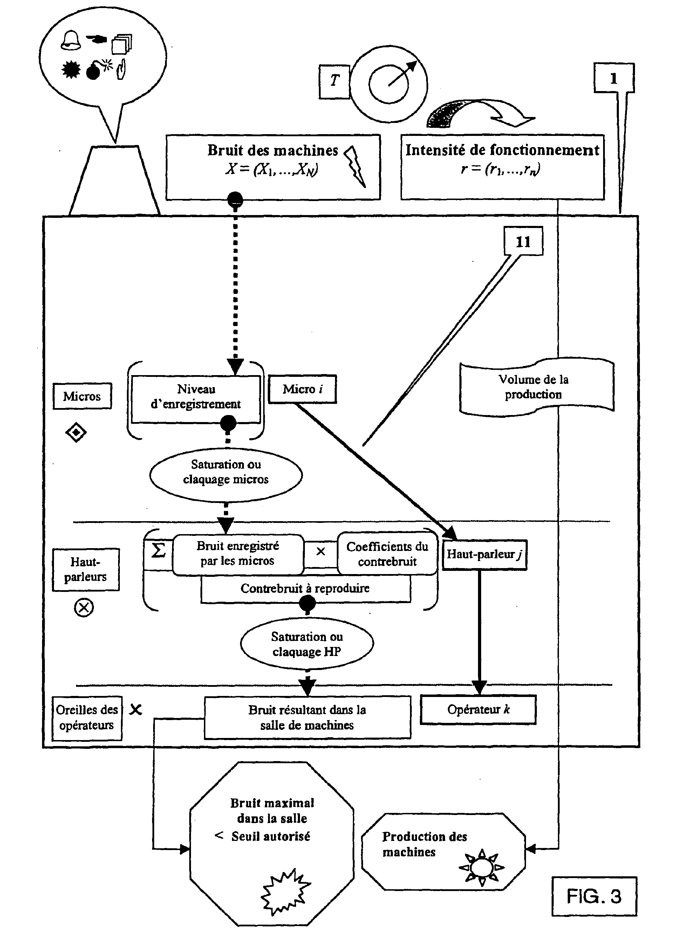

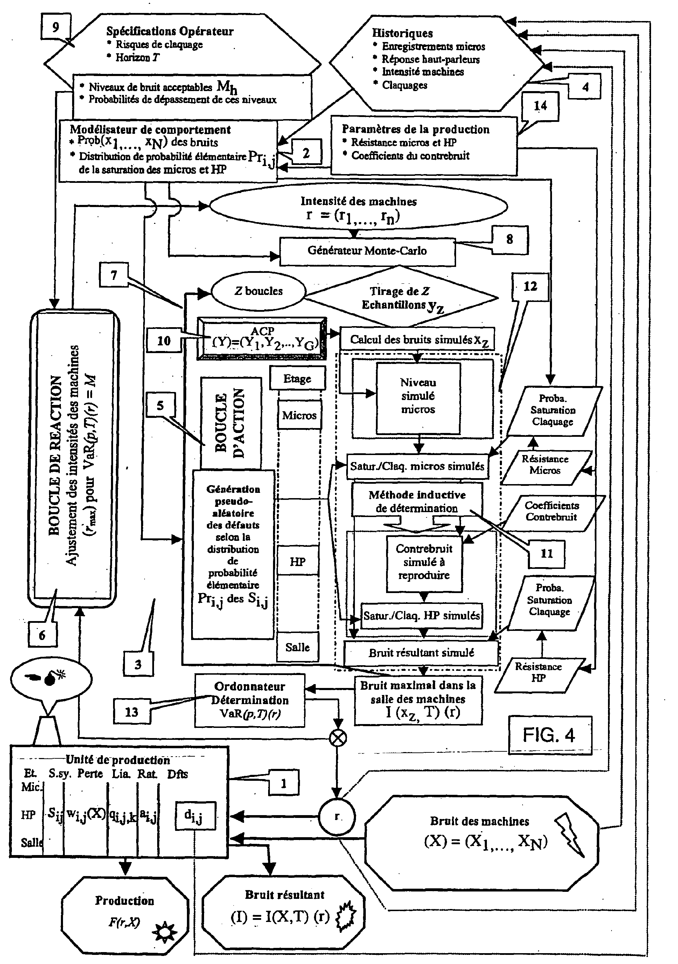

A titre d'exemple de cette dernière configuration, la figure 3 représente, schématiquement, l'organisation d'une usine pour y mettre en oeuvre le procédé et le dispositif de contrôle selon l'invention, afin d'en optimiser la production, en contrôlant néanmoins que le bruit interne à l'usine est en dessous d'un niveau réglementaire. Il est à noter que le maintien du bruit ou des vibrations sous une limite pourrait être lié non pas à une contrainte réglementaire mais à une contrainte de limite de rupture liée à l'intensité de la vibration globale du plateau sur lequel sont montées les machines par exemple. La figure 4 représente les différentes étapes de mise en oeuvre du procédé et les particularités de l'automatisme probabiliste (3) de contrôle de production de l'usine et de réduction du bruit. Selon cette application de l'invention, le centre de production industrielle (1) est une usine contenant des machines-outils ($S_{1,j}$) bruyantes, dont l'intensité de fonctionnement *(r)*, c'est-à-dire leur rythme de production, peut être contrôlée. Plus cette intensité *(r)* est élevée, plus le flux de production *(F)* est élevé, mais aussi, plus le bruit *(I)* produit est fort.

Pour des raisons réglementaires liées à la santé des opérateurs de ces machines, ce bruit ne doit pas dépasser certaines limites, sauf avec une très faible probabilité. Afin de le diminuer, il a été mis au point un système connu appelé " contrebruit ", fonctionnant à l'aide d'un réseau de micros et de haut-parleurs placé dans la salle des machines. Les micros enregistrent le bruit à différents endroits stratégiques de la salle et le transmettent à un calculateur programmé qui, de manière quasi instantanée, transmet un signal à des haut-parleurs répartis dans la salle. Ce signal, appelé " contrebruit " est tel que, si micros et haut-parleurs fonctionnent correctement, il compense, par un effet d'onde en opposition de phase, le bruit des machines. On peut, de cette manière, annuler une proportion très importante de ce bruit (jusqu'à plus de 90 %).

D'une manière générale, le contrebruit est, en première approximation, une combinaison linéaire des signaux enregistrés par les micros. Ce sont les coefficients de cette combinaison que le calculateur programmé recale en permanence par un système de "feed back ". Cette partie est connue de l'art antérieur.

Malheureusement, micros et haut-parleurs sont sujets à saturation et, de façon plus grave, peuvent " claquer " et ne plus fonctionner du tout. Ces imperfections se traduisent directement par une augmentation du bruit résultant dans la salle, et imposent de réduire l'intensité de fonctionnement des machines. La présente invention s'applique de façon avantageuse pour minimiser cette réduction ou, si l'on préfère, maximiser l'intensité de fonctionnement, tout en respectant les normes de contrôle du bruit, spécifiquement dans le cas où la commande de réduction (ou d'augmentation) de l'intensité n'a pas un effet immédiat mais agit avec un délai *T*. Il est alors impératif de prévoir la distribution de probabilité de l'amplitude du bruit résultant dans la salle pendant ce délai afin de s'assurer qu'elle ne dépassera les niveaux réglementaires qu'avec une probabilité réglementairement imposée.

Le système multi-étagé et multi-liaison est formé des machines, des micros et des haut-parleurs. La structure étagée du système global, formée des *sous-systèmes productifs $S_{i,j}$* , apparaît sous la forme suivante :

- Etage $E_1$: Machines
- Etage $E_2$: Micros
- Etage $E_3$: Haut-parleurs

Il s'agit ici d'une structure *matricielle.* En effet, les sous-systèmes de chaque étage sont susceptibles de transmettre leur bruit ou leur signal à tous les sous-systèmes de l'étage suivant.

Le *facteur d'aléa multivarié (X)* est le bruit produit par les différentes machines, en tant qu'onde sonore. Ce bruit est évidemment aléatoire, même pour une intensité de fonctionnement des machines fixe et connue car, même si son amplitude est, dans certains cas, purement fonction de l'intensité de fonctionnement, l'onde elle-même et, en particulier, sa phase, est aléatoire.

L'*horizon de temps T* est le délai qui sépare la commande de l'intensité des machines de la variation réelle de cette intensité. C'est pendant ce délai qu'une variation aléatoire du bruit est susceptible de dépasser la norme.

Dans cette application, seul le premier étage, formé des machines, donne lieu à des *sous-flux de production $F_{1,j}$.* Le *flux de production F* est la résultante de ces sous-flux.

Le *paramètre d'action industrielle (r),* ici multivarié, est l'intensité de fonctionnement des machines. Chacune de ses composantes correspond à l'une des machines.

L'*impact industriel (I)* (voir §a-aaaa), multivarié aussi dans cette application, est le bruit résultant dans la salle, après correction par le contrebruit, tel qu'il est perçu par les opérateurs. Il a autant de composantes qu'il y a d'oreilles d'opérateurs en état de fonctionnement dans la salle.

Le *stress propre $w_{1,j}$* (voir §b) des machines, qui est aussi leur *stress agrégé $W_{1,j}$* car il s'agit du premier étage, est le bruit qu'elles produisent. A cet étage, le *coefficient de transmission $d_{1,j}$* (voir §ccc) n'est pas aléatoire et reste égal à 1 car les machines ne contrôlent aucun bruit par elles-mêmes. On peut concevoir une protection antibruit sur les machines, mais on se ramène au cas sans protection en considérant que le stress propre est le bruit issu de l'ensemble formé de la machine et de sa protection.

Le *stress transmis $w'_{2,j,k}$* (voir §bb) par la machine $S_{1,j}$ au micro $S_{2,k}$ est égal au bruit créé par la machine c'est à dire son stress propre, multiplié par un *coefficient de sensibilité* du micro à ce bruit $q_{2,j,k}$ (voir §cc). Le *stress propre* $w_{2,k}$ du micro $S_{2,k}$ est la résultante des autres sources de bruit que les machines perçue par le micro. Le *stress agrégé* $W_{2,k}$ (voir §c) est le bruit réel total perçu par le micro.

Lorsque le micro " sature " et, pire encore, s'il " claque ", le bruit réel peut différer du signal effectivement enregistré. Le rapport entre le signal enregistré et le bruit réel $W_{2,k}$ est le *coefficients de transmission* $d_{2,k}$ du micro (voir §ccc). Dans le cas où le micro claque, aucun signal n'est enregistré et $d_{2,k} = 0$. Un fonctionnement parfait du micro signifie au contraire $d_{2,k} = 1$. D'une manière générale, ce coefficient de transmission a une valeur située entre 0 et 1, avec une distribution de probabilité dépendant d'un *coefficient de confiance* $a_{2,j}$ éventuellement multivarié (voir §ddddd).

Le signal des micros est ensuite transmis au calculateur programmé central qui le répartit sur les différents haut-parleurs en appliquant des *coefficients de contrebruit* $q_{2,j,k}$ (voir §cc). Cela signifie que chaque haut-parleur $S_{3,k}$ doit reproduire un signal qui est la résultante des signaux transmis par les micros $S_{2,j}$ au calculateur programmé central, affectés des coefficients $q_{2,j,k}$.

Le *stress transmis* $w'_{3,j,k}$ (voir §bb) par le micro $S_{2,j}$ au haut-parleur $S_{3,k}$ est donc égal au produit du stress agrégé du micro $W_{2,j}$ par son coefficient de transmission $d_{2,j}$ et par le coefficient de contrebruit $q_{2,j,k}$.

Les haut-parleurs n'ont pas de stress propre. Leur *stress agrégé* $W_{3,k}$ est égal au signal qu'il leur est demandé de reproduire, c'est-à-dire la résultante des stress transmis.

Lorsqu'un haut-parleur $S_{3,k}$ sature ou, pire, claque, le son qu'il émet diffère du signal reçu. Son coefficient de défaut $d_{3,k}$ est le rapport entre le son émis et le signal reçu. Comme pour les micros, la distribution de probabilité du coefficient de défaut $d_{3,k}$ dépend d'un *coefficient de confiance* $a_{3,k}$ éventuellement multivarié (voir §ddddd).

Dans le cas idéal où micros et haut-parleurs fonctionnent à la perfection, le contrebruit reproduit par les haut-parleurs compense exactement le bruit des machines, de façon quasi uniforme dans la salle. Les opérateurs présents ne subissent qu'un bruit résiduel très réduit. Dans le cas contraire, l'augmentation du bruit résulte d'une part de l'imperfection des micros et, d'autre part, de celle des haut-parleurs. Le bruit total subi par un opérateur $O_k$ résultant d'une part du bruit résiduel et, d'autre part, de la saturation ou du claquage des micros et des haut-parleurs, est donné par la formule :

$$I_k = B_k + \Sigma_j\, q_{4,j,k}\, (d_{3,j}\, W_{3,j} + \Sigma_i\, (1 - d_{2,i})\, q_{2,i,j}\, W_{2,i})$$

où :

- $q_{4,j,k}$ est la sensibilité de l'opérateur $O_k$ au haut-parleur $S_{3,j}$
- $B_k$ est le bruit résiduel qu'aurait de toutes façons perçu l'opérateur $O_k$
- $I_k$ est la composante de l'impact industriel (*I*) liée à l'opérateur $O_k$.

La mise en oeuvre du procédé et de l'invention dans cette application particulière consiste à réaliser un automatisme (3) de contrôle conforme à la figure 4, dont la boucle d'action (5) est un simulateur d'évaluation probabiliste inductive (11) du comportement aléatoire :

- du bruit des machines,
- de la saturation ou du claquage des micros,
- de la saturation ou du claquage des haut-parleurs,
  en vue de générer un échantillonnage aussi fidèle que possible du bruit résultant dans la salle des machines. Ce procédé est caractérisé en ce que, pour générer électroniquement l'impact industriel (*I*) à savoir, le bruit perçu par les opérateurs, on met en place un *processeur probabiliste inductif (12)* selon la méthode inductive (11) de détermination de l'impact, c'est-à-dire contenant les étapes suivantes :
- A l'aide du générateur de Monte-Carlo (8), génération par un tirage aléatoire de type " Monte-Carlo ", du bruit $W_{1,i}$ produit par les machines $S_{1,i}$ suivant les spécifications de l'utilisateur (9) et en utilisant préférentiellement un modélisateur historiquement adaptatif de comportement (2),
- Calcul, pour chaque tirage aléatoire, du bruit $W_{2,j}$ perçu par chaque micro $S_{2,j}$ par application des coefficients de sensibilité $q_{2,i,j}$,
- Simulation du coefficient de défaut $d_{2,j}$ du micro $S_{2,j}$ selon la distribution de probabilité $Pr_{2,j}$ dépendant en particulier du stress $W_{2,j}$ et calcul du signal enregistré par le micro $S_{2,j}$ selon le modélisateur de comportement (2) et les risques de claquage spécifiés par l'utilisateur dans la zone mémoire (9) dite de spécifications opérateur,
- Calcul du signal transmis à chaque haut-parleur $S_{3,k}$ par application des coefficients de liaison $q_{3,j,k}$ et calcul du stress agrégé $W_{3,k}$,
- Simulation du coefficient de transmission $d_{3,k}$ du haut-parleur $S_{3,k}$ selon la distribution de probabilité $Pr_{3,k}$ dépendant en particulier du stress $W_{3,k}$ et calcul du son émis par le haut-parleur $S_{3,k}$ selon le modélisateur de comportement (2) et les risques de claquage spécifiés par l'utilisateur dans la zone mémoire (9) dite de spécification opérateur ,
- Calcul pour chaque tirage aléatoire du bruit théorique $(I) = (I_1,...,I_H)$ perçu par les opérateurs dans la salle,
- Détermination de la VaR (13) du bruit $(I)$ en fonction de la probabilité de dépassement spécifiée par l'utilisateur dans la zone de mémoire (9) dite de spécification opérateur.

La boucle de réaction (6) de cet automatisme (3) de contrôle, vise à déterminer la valeur maximale $(r_{max})$ de l'intensité de fonctionnement des machines pour que le paramètre VaR ne dépasse pas la valeur prescrite $(M)$ spécifiée de même dans la zone de mémoire (9) dite de spécification opérateur. Cette boucle est complétée par un servomoteur agissant sur la commande d'intensité des machines, et maintenant cette valeur calculée $(r_{max})$ en permanence.

Cette procédure étagée de calcul de l'impact final, qui prend en compte à chaque étage et de façon séparée le signal exactement reçu par le sous-système et celui qu'il émet, permet une meilleure estimation de la probabilité de dépassement du seuil sonore autorisé et, par voie de conséquence, une diminution des marges de sécurité et une augmentation des flux de production pour des normes de sécurité données.

La mise en oeuvre de la première variante du procédé de l'invention trouve sa justification dans le fait que le risque de saturation et l'importance de celle-ci, aussi bien pour les micros que pour les haut-parleurs, est d'autant plus élevé que le stress de ces sous-systèmes est important. Selon cette variante, la distribution de probabilité $Pr_{i,j}$ du coefficient de transmission des micros et des haut-parleurs est telle qu'un bruit perçu (micros) ou un signal à transmettre (haut-parleurs) plus important entraîne un niveau de saturation statistiquement plus élevé, de même qu'un claquage plus probable. Typiquement, selon cette variante, on pourra donner à la densité de probabilité $Pr_{i,j}$ sur l'intervalle [0,1] une forme de " cloche " dont le centre se déplace vers la droite lorsque le stress croît. Une telle densité peut par exemple être réalisée à l'aide de " polynômes de Bemstein " $\varphi(x) = \lambda x^a (1-x)^{m-a}$ où l'exposant $\alpha$ est une fonction croissante du stress.

De plus, la saturation, de même que le claquage, peuvent d'une part dépendre de la qualité globale du micro ou du haut-parleur, mais aussi d'un " seuil de saturation " propre à chaque appareil (micro ou haut-parleur) au-delà duquel le phénomène de saturation devient systématique, justifiant ainsi la mise en oeuvre de la seconde variante du procédé de l'invention. Selon cette variante, le coefficient de confiance $a_{i,j}$ des micros et des haut-parleurs possède deux composantes. Une forme recommandée consiste à prendre l'une de ces composantes égale au seuil de saturation, l'autre étant une note attribuée à la fiabilité de l'appareil, qui peut être mesurée statistiquement.

La troisième variante du procédé de l'invention s'applique lorsque les machines sont susceptibles d'émettre de manière sporadique des bruits importants. Dans ce cas l'utilisateur spécifie dans la zone mémoire (9) dite de spécification opérateur, la fréquence de ces " impulsions explosives " et une distribution de probabilité de leur intensité sur le modèle des " scénarios catastrophes ". L'automate probabiliste (3) génère alors un sous-échantillon de valeurs du bruit émis constitué uniquement d'impulsions explosives.

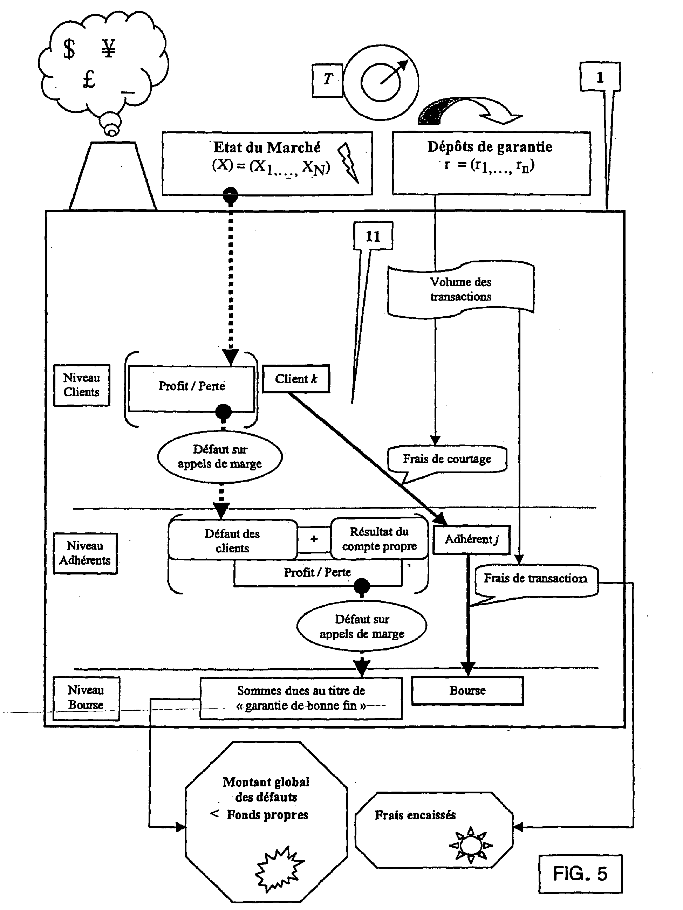

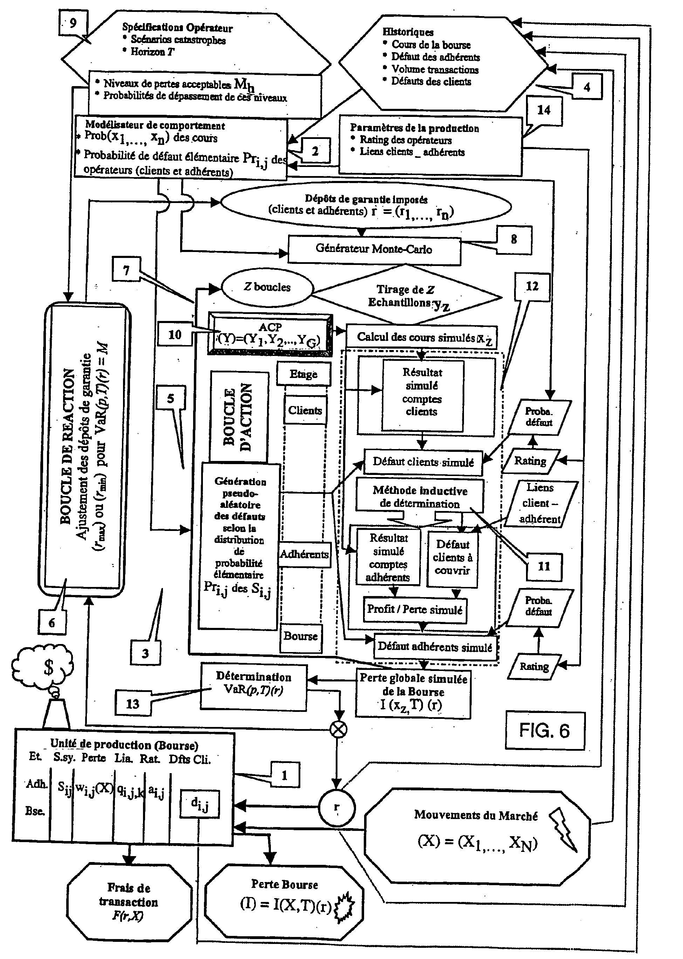

La figure 5 représente schématiquement l'organisation d'une chambre de compensation (bourse) pour mettre en oeuvre le procédé et l'automatisme (3) de contrôle selon l'invention afin de maximiser le volume des transactions (et donc les frais de courtage encaissés) tout en maintenant le risque global de perte financière (liée au défaut d'adhérents) en deçà d'une limite réglementaire. La figure 6 représente les différentes étapes de mise en oeuvre du procédé et les particularités de l'automatisme (3) de contrôle de l'invention pour la chambre de compensation de la figure 5.

L'organisation technologique de l'automatisme électronique probabiliste (3) selon l'invention à mettre en oeuvre au sein d'une chambre de compensation est décrite en référence à la figure 6. Le centre de production industriel (1) est dans cette application, une chambre de compensation de marchés financiers, par exemple une bourse des valeurs.

Rappelons que le principe d'une bourse des valeurs consiste à agréer certains " agents de change ". Un opérateur désirant effectuer une transaction doit obligatoirement la confier à un agent de change. Lorsqu'il le peut, l'agent de change met face à face les opérateurs qui s'adressent à lui et ne passe que le résiduel des ordres à la bourse (y compris ceux qu'il passe pour son propre compte). La " compensation ", qui récapitule toutes les transactions de la journée, est effectuée chaque soir. Au cas où un des opérateurs s'avérerait défaillant, c'est à dire incapable de remplir sa partie de la transaction, l'agent de change est tenu de remplir cette partie à sa place. Pour cette " garantie de bonne fin ", l'agent de change est rémunéré par des frais de courtage. En outre, l'agent de change demande généralement à chacun de ses *clients,* c'est-à-dire les opérateurs effectuant des transactions par son intermédiaire, *un dépôt de garantie* dont le montant est fonction des transactions effectuées.

Cette situation se répercute quasiment à l'identique entre la Bourse et les différents agents de change qui lui sont affiliés. Cette dernière met ses *adhérents,* c'est-à-dire les agents de change, face à face. A l'inverse des agents de change, il lui est interdit de passer des ordres pour elle-même. Par contre elle est aussi tenue à la garantie de bonne fin des transactions entre adhérents. Le coût pour la Bourse de cette garantie est égal à la différence entre le prix auquel a été effectuée la transaction et le prix courant auquel il est possible de la conclure. Comme les agents de changes, la Bourse facture des frais pour chaque transaction et demande des dépôts de garantie à ses adhérents.

Par un effet de concurrence entre les bourses, le volume des transactions, donc le montant des frais de transaction encaissés par une bourse, et par la même son efficacité économique, est directement lié de manière décroissante au montant des dépôts de garantie qu'elle impose à ses adhérents (agents de change). D'un autre côté, le coût global en fin de journée de la garantie de bonne fin (i.e. prenant en compte la totalité des adhérents) ne doit excéder certaines limites $M_1,...,M_H$ qu'au plus avec des fréquences $f_1,...,f_H$ réglementairement imposées. En particulier, le dépassement des fonds propres, qui serait susceptible d'entraîner la faillite, ne doit se produire qu'avec une probabilité infime. Afin d'éviter que les défauts de ses adhérents ne soient trop fréquents, la Bourse doit non seulement leur demander des dépôts de garantie suffisants mais, de plus, doit leur imposer un minimum aux montants que ceux-ci demandent comme garantie à leurs propres clients.

Selon l'invention et dans le schéma boursier, le système multi-étagé et multi-liaison est formé des opérateurs (clients, adhérents) ainsi que de la Bourse elle-même. La *structure multi-étagée* du système global selon l'invention apparaît sous la forme suivante :

- Etage $E_1$ : Clients des adhérents (opérateurs)
- Etage $E_2$ : Adhérents (agents de change)
- Etage $E_3$ : La Bourse (chambre de compensation)

Il est possible d'imaginer une structure ayant plus d'étages si, par exemple, les clients eux-mêmes sont en position de compensateurs pour leurs propres clients.

Les *sous-systèmes productifs $S_{i,j}$* du système multi-étagé et multi-liaison sont les opérateurs (clients, adhérents) ainsi que la Bourse elle-même.

Il s'agit ici *d'une structure arborescente,* si l'on considère comme distincts les comptes d'un même client auprès de différents adhérents (quitte à supposer une corrélation de 100% entre les défauts de comptes émanant d'un même client). En effet, chaque client n'est lié qu'à un seul adhérent et le sommet de l'arbre n'est composé que d'un seul sous-système : la Bourse.

Le *facteur d'aléa multivarié (X)* est l'ensemble des variations des cours des différents actifs côtés en Bourse pendant la journée. L'impact de chacun des ces actifs sur les opérateurs (clients, adhérents ou Bourse) est égal au produit de la variation de son prix par la quantité d'actifs que les opérateurs possèdent en portefeuille.

L'*horizon de temps T* naturel est la journée. Mais un contrôle des mouvements du marché sur plusieurs jours peut s'avérer nécessaire si, pour des raisons de liquidité, le portefeuille d'un opérateur en défaut ne peut être liquidé en un seul jour.

Chaque transaction effectuée pour un client par un adhérent donne lieu au versement de frais de courtage. L'ensemble des frais de courtage versés par un client $S_{1,j}$ à un adhérent $S_{2,k}$ représente le *sous-flux de production $F_{2,j,k}$*. De même, chaque transaction effectuée par un adhérent à la Bourse donne lieu à des frais de transaction. L'ensemble des frais de transaction versés par un adhérent $S_{2,j}$ à la Bourse $S_3$ représente le *sous-flux de production $F_{3,j}$* (il n'y a pas de troisième indice car il y a un seul sous-système dans l'étage $E_3$). Le *flux de production F* est la somme de tous les sous-flux $F_{3,j}$, c'est-à-dire de tous les frais perçus par la Bourse pour la journée.

Chaque actif détenu en portefeuille donne lieu à un dépôt de garantie qui, en règle générale, est proportionnel à la quantité d'actifs. Le *paramètre d'action industrielle (r)* est le rapport de proportionnalité entre la quantité d'actifs et le dépôt de garantie associé. Il est multivarié, car ce rapport dépend de l'actif considéré. Plus il est élevé, plus le dépôt requis est important, ce qui a pour conséquence de diminuer le risque de défaut, mais aussi le volume des transactions, c'est-à-dire le flux de production F et les sous-flux $F_{i,j,k}$.

L'*impact industriel (I)* (voir §a-aaaa) est, dans cette application, le montant total que la Bourse doit verser aux contreparties de ses adhérents en situation de défaut au titre de la garantie de bonne fin ". On peut concevoir une seconde composante à cet impact industriel qui serait ce même montant, diminué des sommes récupérées après liquidation des adhérents en défaut.

Le *stress agrégé $W_{i,j}$* (voir §b-bb) des sous-systèmes $S_{i,j}$ est égal à la partie négative de leur résultat financier en fin de journée.

- Pour les clients (ou, s'il y a plusieurs étages de " clients ", pour les clients en bout de chaîne), ce résultat est l'impact des mouvements du marché (le *facteur d'aléa multivarié)* sur leur portefeuille, c'est-à-dire l'ensemble des transactions effectuées dans la journée (qui peut être positif ou négatif) Dans ce cas, le *stress agrégé* coïncide avec le *stress propre.*
- Pour les adhérents (ou pour les clients-compensateurs), il est composé d'une part de cet impact sur leur portefeuille propre (leur *stress propre,* positif ou négatif) et, d'autre part, du montant à payer au titre de la garantie de bonne fin en cas de défaut d'un ou plusieurs clients (le *stress transmis,* toujours négatif).
- Pour la Bourse, il n'y a qu'un stress transmis par les adhérents en situation de défaut car elle ne peut avoir de portefeuille propre. L'impact industriel *(I)* s'identifie au stress agrégé $W_3$ de l'unique sous-système de l'étage $E_3$, c'est-à-dire la Bourse.

Le montant du *stress transmis* (voir §c-ccc) peut être soit la totalité, soit une proportion seulement, de la perte encourue par le client ou l'adhérent. Cette proportion (égale à 1 si le défaut est total et à 0 s'il n'y a pas défaut) est le *coefficient de défaut* $d_{i,j}$ du client ou de l'adhérent.

Ce *coefficient de défaut* (voir §d-ddddd) est évidemment une inconnue. Mais sa distribution de probabilité $Pr_{i,j}$ se déplace vers les valeurs plus élevées lorsque la perte de l'opérateur est plus importante, justifiant ainsi la mise en place de la première variante du procédé de l'invention. Le *coefficient de confiance* $a_{i,j}$ du sous-système $S_{i,j}$ porte le nom de " rating " de l'opérateur. Dans les systèmes existants de l'art antérieur, ce " rating " est une simple note attribuée à l'opérateur. Dans sa seconde variante, la présente invention recommande un " rating " ayant au moins deux composantes. La première reflète la taille ou, en l'occurrence, le niveau de fonds propres de l'opérateur $FP_{i,j}$. La seconde reflète sa fiabilité ou, si l'on préfère, sa probabilité de défaut pour un rapport donné entre son stress agrégé $W_{i,j}$ (i.e. la perte encourue) et ses fonds propres $FP_{i,j}$.

La troisième variante du procédé de l'invention trouve sa justification dans les " krachs boursiers " qui historiquement ne se produisent qu'à l'échelle de plusieurs années. Si l'enregistrement historique des cours et des défauts ne dure qu'un an, voire un nombre limité d'années, il est possible, et même probable, qu'aucun " krach " n'ait eu lieu pendant la période d'enregistrement. Cependant, le calcul du risque de la Bourse ne saurait ignorer la possibilité d'un tel événement catastrophique. La technique connue habituelle dite du " stress test " consiste à simuler un mouvement global vers le bas, par exemple 20%, de toutes les actions cotées en bourse. Certains opérateurs ont pour stratégie de parier sur le mouvement à la hausse ou à la baisse d'un titre par rapport à la moyenne des autres, ou par rapport à l'indice de la Bourse. Dans un " stress test ", ce titre variera de - 20% de même que la moyenne ou l'indice. Un tel opérateur apparaîtra comme ayant un risque nul, alors que dans un " krach " réel, son risque est au contraire augmenté car le titre, par exemple joué à la hausse, peut perdre 30% là où la moyenne des autres titres n'a perdu que 20%. La troisième variante de l'invention recommande la simulation d'une *sous-famille de situations catastrophiques* dont certains échantillons feront clairement apparaître le risque réel de l'opérateur.

La mise en oeuvre du procédé et de l'invention dans cette application particulière liée au schéma bousier est décrite figure 6. Elle consiste à réaliser un automatisme probabiliste (3) de contrôle conforme à la structure générale de celui de la figure 4, dont la boucle d'action (5) est un simulateur d'évaluation probabiliste inductive (11) du comportement aléatoire :

- des cours de la bourse,
- du défaut des opérateurs (clients et adhérents), en vue de générer un échantillonnage aussi fidèle que possible du montant financier que coûtera à la Bourse en fin de journée son obligation de garantie de bonne fin.

Ce procédé est caractérisé en ce que, pour générer électroniquement l'impact industriel *(I)* à savoir ce montant financier, on met en place un processeur probabiliste inductif (12) selon la méthode inductive (11) de détermination de l'impact, c'est-à-dire contenant les étapes suivantes :

- A l'aide du générateur de Monte-Carlo (8), génération par un tirage aléatoire de type " Monte-Carlo " des cours $X_i$ des actifs cotés en Bourse, en considérant les risques de catastrophe spécifiés par l'utilisateur dans la zone mémoire (9) dite de spécification opérateur,
- Calcul, pour chaque tirage aléatoire, du résultat financier $W_{1,i}$ de chaque client $S_{1,i}$ suivant les spécifications de l'utilisateur (9) et en utilisant préférentiellement un modélisateur historiquement adaptatif de comportement (2),
- Simulation du coefficient de défaut $d_{1,i}$ du client $S_{1,i}$ selon la distribution de probabilité $Pr_{1,i}$ dépendant en particulier du stress $W_{1,i}$ et du " rating " du client $S_{1,i}$ selon le modélisateur de comportement (2), puis calcul du montant du défaut du client $S_{1,i}$,
- Calcul, pour chaque tirage aléatoire, du stress agrégé $W_{2,j}$ de chaque adhérent $S_{2,j}$ résultant d'une part de la somme des défauts de clients à couvrir (stress transmis), en respectant la structure arborescente du système et, d'autre part, du stress propre $w_{2,i,j}$ (résultat financier en fin de journée),
- Simulation du coefficient de défaut $d_{2,j}$ de l'adhérent $S_{2,j}$ selon la distribution de probabilité $Pr_{2,j}$ dépendant en particulier du stress $W_{2,j}$ et du " rating " de l'adhérent, puis calcul du montant du défaut de l'adhérent $S_{2,j}$ selon le modélisateur de comportement (2), Calcul pour chaque tirage aléatoire du montant théorique *(I)* que coûtera à la Bourse la garantie de bonne fin,
- Détermination de la VaR (13) de l'impact *(I)* en fonction de la probabilité de dépassement spécifiée par l'utilisateur dans la zone de mémoire (9) dite de spécification opérateur.

La boucle de réaction (6) de cet automatisme probabiliste (3) de contrôle consiste à déterminer les valeurs minimales $(r_{1min},..., r_{nmin})$ des coefficients à appliquer pour le calcul des dépôts de garantie pour que le paramètre VaR ne dépasse pas la valeur prescrite *(M)* spécifiée de même dans la zone de mémoire (9) dite de spécification opérateur. Cette boucle est complétée par une procédure automatique d'ajustement des dépôts de garantie.

Cette procédure étagée de calcul de l'impact final, qui prend en compte à chaque étage le montant à couvrir en raison du défaut des sous-systèmes de l'étage précédent pour le calcul de la probabilité de défaut de chaque sous-système, permet une meilleure estimation de la probabilité de dépassement du seuil autorisé et, par voie de conséquence, une diminution des marges de sécurité et une augmentation des flux de production (activité financière de la Bourse) pour des normes de sécurité données. Ces normes de sécurité peuvent recouvrir notamment :

- La directive " CAD " des communautés Européenne publiée le 15 mars 1993, sur l'adéquation des fonds propres des entreprises d'investissement et des établissements de crédit, et visant à imposer des exigences de solvabilité minimales compte tenu des risques de marchés liés aux produits financiers, et des risques de change ...,
- Les directives de Comité de Basle " Basle Committee on banking régulation and supervisory practices " s'adressant aux maisons de titres et aux banques ayant des activités de marché, et prévoyant notamment dans " Amendment to the Capital Accord to incorporate market risks " publié en Janvier 1996, et demandant que chaque établissement opte pour un modèle VaR pour l'appréhension des risques de marché ...,
- Les recommandations du " Groupe des 30" regroupant les leaders mondiaux de l'industrie, des banques, et de banques centrales du monde entier et recommandant des principes pour réduire les risques financiers...

La mise en oeuvre, dans le schéma boursier, de la première variante du procédé de l'invention trouve sa justification dans le fait que le risque de défaut et l'importance de celui-ci, aussi bien pour les clients que pour les adhérents, sont d'autant plus élevés que le stress de ces sous-systèmes est important. Selon cette variante, la distribution de probabilité $Pr_{i,j}$ du coefficient de défaut des clients et des adhérents est telle qu'une perte financière (clients) ou un montant global à couvrir - défauts + perte - (adhérents) plus important, entraîne un coefficient de défaut statistiquement plus élevé. Typiquement, selon cette variante, la densité de probabilité $Pr_{i,j}$ pourra être constituée d'une probabilité $1-p_{ij}$ de la valeur 0 et répartition uniforme sur l'intervalle [0,1] de poids total $p_{i,j}$, où la probabilité de défaut $p_{i,j}$ est une fonction croissante du stress agrégé $W_{i,j}$.

De plus, le défaut des clients et des adhérents peut d'une part dépendre de la fiabilité globale de l'opérateur, mais aussi d'un " seuil de défaut " propre à chaque opérateur (client ou adhérent) au-delà duquel le défaut devient presque inévitable, justifiant ainsi la mise en oeuvre de la seconde variante du procédé de l'invention. Selon cette variante, le coefficient de confiance $\alpha_{i,j}$ des clients et des adhérents possède deux composantes. Une forme recommandée consiste à prendre l'une de ces composantes égale au montant des fonds propres, l'autre étant une note attribuée à la fiabilité de l'opérateur, qui peut être fournie par des agences de notation spécialisées.

La mise en oeuvre de la troisième variante du procédé est justifiée par les mouvements brutaux des cours - à la hausse ou à la baisse - qui apparaissent de manière sporadique. Dans ce cas l'utilisateur spécifie dans la zone mémoire (9) dite de spécification opérateur, la fréquence de ces " mouvements catastrophiques " et une distribution de probabilité de leur intensité sur le modèle des " scénarios catastrophes ". L'automate génère alors un sous-échantillon de valeurs des cours constitué uniquement de scénarios catastrophes.

L'invention ayant maintenant été décrite, et son intérêt justifié sur des exemples détaillés, les demandeurs s'en réservent l'exclusivité pendant toute la durée du brevet, sans limitation autre que celle des termes des revendications ci-après.

## Revendications

1. Procédé de régulation d'un flux F de production industrielle multi-étagée et multi-liaison, visant à optimiser ce flux de production *(F)* en agissant sur un paramètre d'action industrielle *(r)*, tout en maîtrisant un impact industriel *(I)* résultant d'un stress enchaîné aléatoire aux différents étages de la production,

   ce procédé de régulation étant appliqué spécifiquement à une production multi-étagée et multi-liaison, c'est-à-dire une production :

   - composée de plusieurs étages de production notés $E_1,...,E_m$,
   - dont chaque étage de production $E_i$ est composé de sous-systèmes productifs $S_{i,j}$,
   - recevant un ou des sous-flux de production $F_{i,j,k}$ d'un ou plusieurs sous-systèmes $S_{i-1,k}$ de l'étage précédent $E_{i-1}$ (sauf le premier $i = 1$),
   - et transmettant un ou des sous-flux de production $F_{i+1j,k}$ à un ou plusieurs sous-systèmes $S_{i+1,k'}$ de l'étage suivant $E_{i+1}$ (sauf au dernier étage $i = m$),
   - dont les sous-flux de production $F_{ij,k}$ peuvent être contrôlés à l'aide d'un paramètre d'action industrielle *(r)* éventuellement multivarié $(r) = (r_1,...,r_n)$,
   - et dont le flux de production industrielle (global) $F(r)$ résulte de la combinaison des sous-flux de production $F_{i,j,k}$,

   ce procédé de régulation étant appliqué spécifiquement à une production du type à stress enchaîné aléatoire, c'est-à-dire une production :

- ayant un impact industriel $I(X, T)(r)$ (généralement nuisible), éventuellement multivarié $(I) = (I_1,...,I_H)$,
- devant être maîtrisée (notamment pour des raisons réglementaires) dans un horizon de temps $T$,
- et qui est la résultante d'un enchaînement en cascade de stress agrégés $W_{i,j}$ (phénomène mesurable) subis par chacun des sous-systèmes productifs $S_{i,j}$,

dont ledit impact *industriel I(X, T)(r)* dépend :

- de manière globalement monotone (croissante ou décroissante) des stress agrégés $W_{i,j}$ des sous-systèmes $S_{i,j}$ aux différents étages de production $E_i$, une au moins des composantes élémentaires d'impact $I_h$ dépendant des stress agrégés $W_{m,j}$ des sous-systèmes $S_{m,j}$ du dernier étage de production $E_m$,
- d'un facteur environnemental multivarié d'aléa de production $(X) = (X_1,...,X_N)$, chacun *des $X_i$* étant appelé sous-facteur d'aléa de production,
- de l'horizon de temps $T$,
- et de manière globalement monotone (croissante ou décroissante, dans le même sens que par rapport aux stress agrégés $W_{m,j}$) du paramètre d'action industrielle *(r)* par l'intermédiaire des stress agrégés $W_{m,j}$,

dont chaque stress agrégé $W_{i,j}$ est, en mode nominal, contenu au niveau du système $S_{ij}$ mais peut, en mode défaut, être partiellement ou totalement transmis à l'étage suivant $E_{i+1}$, c'est-à-dire dont chaque stress agrégé $W_{i,j}$ est la résultante (somme) :

- d'un stress propre $W_{i,j}$ au sous-système productif $S_{i,j}$, dépendant — de manière connue et spécifique au sous-système — du facteur environnemental multivarié d'aléa de production *(X)* ainsi que de façon globalement croissante du paramètre d'action industrielle *(r)*, et
- de stress transmis $W'_{i,j,k}$ par certains des sous-systèmes productifs $S_{i-1,k}$ de l'étage précédent $E_{i-1}$,

dont chacun des stress transmis $W'_{i,j,k}$ est la combinaison, se matérialisant sous la forme de la combinaison (produit),

- du stress agrégé $W_{i-1,k}$ du sous-système $S_{i-1,k}$,
- d'un coefficient de liaison $q_{i,j,k}$ constant, ou connu mais non aléatoire,
- et d'un coefficient de transmission aléatoire $d_{i-1,k}$ du sous-système productif $S_{i-1,k}$ variant entre 0 et 1, dont la distribution de probabilité de transmission élémentaire $Pr_{i,j}(X,T,r, W_{i,j},a_{i,j})$ du sous-système productif $S_{i,j}$ est connue et dépend

- du facteur multivarié $X$ d'aléa de production,
- de l'intervalle de temps $T$,
- du paramètre d'action industrielle $r$,
- du stress $W_{i,j}$ *est*
- d'un coefficient de confiance $a_{i,j}$ éventuellement multi-valué, propre au sous-système productif $S_{i,j}$,

- et dont les caractéristiques résultent notamment, mais pas exclusivement, d'une analyse historique du défaut des sous-systèmes productifs,

dont la configuration de production peut être :

- soit *arborescente* — pour chaque sous-système $S_{i,k}$ d'un étage $E_i$, un des coefficients de liaison $q_{i+1j',k} = 1$ et les autres $q_{i+1j',k}$ sont nuls, ce qui correspond au cas où un sous-système productif de l'étage $E_i$ ne peut transmettre son stress $W_{i,k}$ qu'à un seul sous-système productif de l'étage suivant $E_{i+1}$ —,
- soit, dans le cas plus général, *matricielle,* et dans ce cas, chaque coefficient de liaison $q_{i,j,k}$ peut prendre toute valeur,

dont les dits coefficients de transmission $d_{i,j}$ peuvent être

- soit *binaires* — ils ne prennent que les valeurs 0 ou 1, c'est-à-dire qu'un sous-système productif fait défaut ou ne fait pas défaut, mais il n'y a pas de défaut partiel — et, dans ce cas, la distribution de probabilité de défaut élémentaire $Pr_{i,j}(X, T, r W_{i,j},\alpha_{i,j})$ de chaque sous-système productif $S_{i,j}$ se réduit à un seul nombre $p_{i,j}(X,T,r, W_{i,j}, a_{i,j})$ qui est la probabilité que le défaut ait lieu (i.e. $d_{i,j} = 1$) — ,

- soit, dans le cas plus général, *quelconques,* — c'est-à-dire qu'ils peuvent prendre toute valeur entre 0 et 1, les défauts partiels sont possibles et la distribution de probabilité de défaut élémentaire $Pr_{i,j}(X,T,r,W_{i,j},a_{i,j})$ de chaque sous-système productif $S_{i,j}$ est une fonction positive définie sur l'intervalle [0,1] des valeurs possibles du coefficient de transmission —,

ce procédé de contrôle de production étant spécifiquement mis en oeuvre dans le cas :

- où les variations sur l'intervalle de temps $T$ des sous-aléas $X_i$ constituant ledit facteur multivarié $X$ d'aléa d'environnement

- sont quantifiables par une loi de probabilité jointe $Prob(x_1,...,x_N)$ connue, $x_i$ étant l'état générique que peut prendre le sous-aléa $X_i$,
- et dont, en général, les caractéristiques, notamment de moyenne, de variance et de corrélations ainsi que de comportements extrêmes, résultent de l'analyse statistique d'un enregistrement historique des sous-aléas $X_i$

- et où les composantes élémentaires d'impact $I_h(X,T)(r)$ dudit impact industriel $I(X,T)(r)$ du flux de production $F(r)$ ne doivent pas dépasser, soit vers le haut (type 1), soit vers le bas (type 2), des niveaux de nuisance $M_h$, ce avec une fiabilité industrielle probabiliste $Prob[I_h(X,T)(r) < M_h] > p_h$ (type 1), ou $Prob[I_h(XT)(r) > M_h] > $ ph (type 2), lesdits niveaux de nuisance $M_h$ et les probabilités $p_h$ étant imposés notamment réglementairement ;

ce procédé étant spécifiquement du type consistant, de manière connue :

- à effectuer électroniquement un échantillonnage le plus fidèle possible, et ce en fonction du paramètre d'action industrielle *(r),* dans l'intervalle de temps *(T),* de l'état de la production constitué :

- des valeurs que peuvent prendre les sous-facteurs d'aléa $X_i$,
- des stress $W_{i,j}$ des sous-systèmes productifs $S_{i,j}$,
- de leurs coefficients de transmission $d_{ij}$;
- des composantes élémentaires d'impact $I_h(X, T)(r)$
- des sous-flux de production $F_{i,j,k}(r)$,
- du flux de production $F(r)$,

- à générer électroniquement, toujours pour l'horizon de temps $T,$ et ce en fonction des valeurs possibles du niveau du paramètre d'action industrielle *(r)* — boucle d'action (5) de l'automatisme (3) de contrôle de production — l'estimateur multivarié d'impact maximal avec seuil de probabilité multivarié $(p) = (p_1,...,p_H)$, défini comme le vecteur VaR$(p,T)(r)$ des limites VaR$_h(p_h,T)(r)$ que lesdites composantes élémentaires d'impact $I_h(X,T)(r)$ ne franchiront (vers le haut ou vers le bas selon le type de système) qu'avec une probabilité $(1-p_h)$, c'est-à-dire $Prob[I_h(X,T)(r) > VaR_h(p_h,T)(r)] = (1-p_h)$ (type 1) ou $Prob[I_h(X,T)(r) < VaR_h(p_h,T)(r)] = (1-p_h)$ (type 2),
- et à régler au cours du temps — boucle de réaction (6) de l'automatisme (3) de contrôle de production — le niveau du paramètre d'action industrielle *(r)* à la valeur extrémale multi-variée $(r_{max})$ ou $(r_{min})$ maintenant ledit estimateur d'effet VaR$(p,T)(r)$ en deçà de son niveau de nuisance autorisé M, c'est-à-dire, pour chaque indice h, VaR$_h(p_h, T)(r_{max\ ou\ min}) < M_h$ (type 1), ou VaR$_h(ph, T)(r_{max\ ou\ min}) > M_h$ (type 2), pour rendre extrémal le niveau de production industrielle $F(r)$ à un niveau néanmoins compatible avec le respect de ladite condition réglementaire de contrôle de nuisance $Prob[I_h(X,T)(r) > M_h] \geq p_h$ (type 1), $Prob[I_h(X, T)(r) < M_h] \geq p_h$ (type 2),

ce procédé étant en outre spécifiquement du type consistant à effectuer électroniquement un dit échantillonnage de l'état de la production selon une méthode pseudo-aléatoire de type " Monte-Carlo ", dont le nombre global de tirages est $Z$ et, pour ce faire, procéder généralement de la manière suivante :

- à faire le choix (validé par des tests statistiques classiques adéquats) d'un modèle de comportement simultané des différents sous-facteurs d'aléa de production $(X_i)$, (il peut s'agir notamment de lois normales, log-normales, ou plus généralement d'une distribution des niveaux des sous-facteurs d'aléa de production $(X_i)$ justifiés à partir d'observations notamment historiques de ces aléas),
- puis, subsidiairement (dans le but d'accélérer la rapidité de la boucle de contrôle, et donc d'améliorer les performances et la fiabilité de l'automatisme (3) de contrôle en réduisant l'horizon $T$) à effectuer une analyse en composantes principales (ACP) des différents sous-facteurs d'aléa, c'est-à-dire à considérer les relations qui expriment le comportement de ces sous-facteurs d'aléa de production $(X_i)$ en fonction de facteurs communs d'aléas, indépendants entre eux, ce, sous la forme d'un facteur d'aléa indiciel multi-valué aléatoire d'environnement de production $(Y) = (Y_1, Y_2 .......,Y_G)$, les $(Y_g)$ étant dits sous-facteurs communs d'aléa indiciel de production, avec généralement $G << N$,

- puis, a partir d'une part dudit modèle de comportement des différents sous-facteurs d'aléa de production $(X_i)$, et des paramètres de distribution des sous-facteurs d'aléa indiciel $(Y_i)$, à construire électroniquement selon la méthode de Monte-Carlo :

- soit un nombre $Z$ d'échantillons pseudo-aléatoires de vecteurs d'état $x_z = (x_{z,1}, x_{z,2},...,x_{z,N})$, $z = 1,...,Z$ de valeurs possibles desdits sous-facteurs d'aléa de production $(X_i)$, [Cette génération électronique est réalisée à partir de paramètres décrivant chacun desdits sous-facteurs d'aléa $X_i$ pris individuellement, mais aussi à partir des corrélations liant ceux-ci entre eux, notamment selon les méthodes de décomposition connues de Cholesky et des " valeurs singulières "],

- soit, lorsqu'on effectue l'ACP, un nombre $Z$ d'échantillons pseudo-aléatoires de vecteurs d'état indiciel $y_z = (y_{z,1}, y_{z,2},...,y_{z,G})$, $z = 1,...,Z$ de valeurs possibles de dits sous-facteurs communs d'aléa indiciel de production $(Y_g)$, puis à déterminer électroniquement, pour chaque échantillon pseudo-aléatoire dudit vecteur spécifique d'état indiciel $y_z$, la valeur correspondante du facteur d'aléa multivarié correspondant $(x_z) = (X_{z,1}, X_{z,2},....,X_{z,N})$, selon les coefficients de l'analyse en composante principale,

- à déterminer électroniquement, pour chaque échantillon pseudo-aléatoire dudit vecteur spécifique d'état indiciel $x_z$, et en fonction dudit paramètre d'action $(r)$, le niveau correspondant de l'impact industriel multi-valué $I(x_z,T)(r)$,

- à ordonner et regrouper électroniquement les $Z$ résultats, et, pour chaque composante élémentaire d'impact $I_h$, à comptabiliser électroniquement pour chaque valeur $V$ que peut atteindre la composante $I_h$ le nombre $Z_h(V)$ desdits échantillons électroniques pour lesquels ladite composante d'impact $I_h(x_z, T)(r)$ dépasse (vers le haut ou vers le bas, selon le type 1 ou 2 de production à contrôler) la valeur V et donc à calculer électroniquement la pseudo-probabilité $P'_h(V) = Z_h(V) /Z$ de dépassement de la valeur $V$ par ladite composante d'impact $I_h$,

- à en déduire électroniquement les variations de $VaR_h(p_h,T)(r)$ pour $p_h$ imposé, et ce en fonction dudit paramètre d'action $(r)$, [définie par $Pr[I_h(X,T)(r) >$ (ou $<$) $VaR_h] = (1-p_h)$]

- à déterminer la multivaleur extrémale, $(r_{max})$ ou $(r_{min})$ selon le type de système, pour laquelle l'estimateur multi-valué $VaR(p,T)(r)$ vaut exactement la valeur réglementaire $M$ et ajuster notamment par un procédé de type asservissement ou servomoteur la valeur du paramètre d'action $(r)$ à ce niveau (éventuellement multiple).

**ledit procédé étant caractérisé en ce que**, pour générer électroniquement les composantes élémentaires d'impact $I_h(x_z,T)(r)$ correspondant à chaque échantillon de l'aléa $x_z$, on détermine électroniquement pour chaque échantillon pseudo-aléatoire dudit facteur d'aléa multivarié $(x_z)$ et ce en fonction du paramètre d'action industrielle $(r)$, le niveau des stress agrégés $W_{z,i,j}$ de chacun des sous-systèmes productifs $S_{i,j}$ par une **méthode inductive (11) partant du premier étage $E_1$ vers le dernier $E_m$**, c'est-à-dire que :

- en partant du premier étage $E_1$, on mesure le niveau dudit stress propre $W_{1,j}(x_z)$ de chacun des sous-systèmes $S_{i,j}$ à l'étage $E_1$ de la production industrielle,

a) on détermine, ce uniquement pour l'étage concerné $E_1$, le stress propre $W_{1,j}(x_z)$ de chacun des sous-systèmes $S_{1,j}$ avec le stress agrégé $W_{z,1,j}$,

b) puis, on effectue électroniquement une génération pseudo-aléatoire dudit coefficient de transmission $d_{z,1,j}$ de chacun des sous-systèmes productifs $S_{1,j}$ de l'étage $E_1$, suivant ladite distribution de probabilité de défaut élémentaire $Pr_{1,j}(x_z,T,r,W_{z,1,j},a_{1,j})$ du sous-système productif $S_{1,j}$, c'est-à-dire, qu'on génère électroniquement un nombre pseudo-aléatoire $u_{z,1,j}$ dans l'intervalle $[0,1]$, et on lui applique électroniquement la fonction de répartition inverse $\Phi_{1j}(x_z, T,r, W_{z,1,j},a_{1,j})(u_{z,1,j})$ de la probabilité de défaut élémentaire $Pr_{1j}(x_z, T,r, W_{z,1,j}, a_{1,j})$ du sous-système productif $S_{i,j}$,

c) on mesure le niveau dudit stress propre $W_{2,k}(x_z)$ de chacun des sous-systèmes $S_{2,k}$ à l'étage $E_2$ de la production industrielle,

d) on évalue électroniquement ledit stress agrégé $W_{z,2,k}$ de chaque sous-système $S_{2,k}$ de l'étage $E_2$ par la formule :

$$W_{z,2,k} = W_{2,k}(x_z) + \sum_j W'_{z,2,j,k} = W_{2,k}(x_z) + \sum_j W_{z,1,j}(x_z) \times d_{z,1,j} \times q_{2,j,k} ,$$

- on réitère ces opérations (b à d) d'étage en étage jusqu'à obtenir les stress agrégés $W_{z,m,j}$ des sous-systèmes productifs $S_{m,j}$ de l'étage $E_m$,

- et on en déduit l'impact industriel multivarié $1(x_z, T)(r)$ lié à l'échantillon d'indice z ; en sorte que, pour chaque échantillon Monte-Carlo emboîté constitué du facteur d'aléa environnemental multivarié $x_z$ et des coefficients de transmission $d_{z,ij}$ émis :

- on mesure l'impact industriel $I$ en tenant compte conjointement de l'enchaînement en cascade des stress $W_{z,i,j}$ à chacun des étages de la production et du caractère aléatoire des coefficients de transmission $d_{z,i,j}$

- on en retire une mesure plus précise de la probabilité de dépassement d'un niveau donné $V$ de l'impact $I(r)$ et, donc, de l'estimateur d'impact maximal VaR$(p,T)(r)$, de telle manière que :

- les fréquences effectives de dépassement des limites autorisées pour les composantes élémentaires d'impact $I_h$ sont plus proches des valeurs cibles $(1-p_h) / T$,
- ce qui permet de diminuer les marges de sécurité industrielle à appliquer au niveau de résistance $M$ et, par voie de conséquence, augmente le flux de production $F(r)$ respectant une réglementation donnée,
- on constitue grâce à ce procédé de contrôle un automatisme (3) de contrôle de production plus efficace.

**2.** Procédé selon la revendication 1, de régulation d'un flux $F$ de production industrielle multi-étagée et multi-liaison, visant à optimiser ce flux de production $F$, en agissant sur un paramètre d'action industrielle *(r)*, tout en maîtrisant un impact industriel $I$ résultant d'un stress enchaîné aléatoire aux différents étages de production, ledit procédé étant **caractérisé en outre en ce que** l'on impose électroniquement que les coefficients de transmission $d_{z,i,j}$ des sous-systèmes productifs $S_{i,j}$ soient plus élevés lorsque les stress agrégés $W_{z,i,j}$ sont plus importants, et on matérialise ceci :

- par le fait que, pour un seuil quelconque $d < 1$, on fixe électroniquement que la loi de probabilité $Pr_{i,j}(x_z, T,r, W_{z,i,j},a_{i,j})[d_{z,i,j} > d]$ croisse avec la valeur du stress agrégé $W_{z,iJ}$,
- et/ou que l'on fixe électroniquement les paramètres de description de la fonction de répartition inverse $\Phi_{i,j}$ $(x_z,T,r, W_{z,i,j},a_{i,j})(u_{z,i,j})$ de manière qu'elle soit une fonction croissante du paramètre $W_{z,i,j}$, tous les autres paramètres et variables, y compris $u_{z,ij}$, étant fixés,

en sorte que :
- à chaque étage de la production, on induit une plus grande probabilité de transmission d'une proportion donnée du stress vers l'étage supérieur,
- on prend mieux en compte le fait que, dans la majorité des cas, les coefficients de transmission élevés apparaissent précisément lorsque le stress est important, entraînant une augmentation sensible du niveau moyen du stress transmis à l'étage supérieur et, par voie de conséquence, de la valeur de l'effet induit global, de telle manière que :

l'on corrige un des défauts des systèmes de contrôle classiques, qui en ne respectant pas ce procédé complémentaire, amènent à une sous-évaluation importante du nombre de cas où l'impact industriel dépasse la valeur limite autorisée $M$, et on évite un des défauts associés de ces systèmes classiques qui, afin de respecter les normes industrielles, tendent à utiliser des marges de sécurité plus importantes et donc à réduire le flux de production.

**3.** Procédé selon la revendication 1, de régulation d'un flux $F$ de production industrielle multi-étagée et multi-liaison, visant à optimiser ce flux de production $F$, en agissant sur un paramètre d'action industrielle *(r)*, tout en maîtrisant un impact industriel $I$ résultant d'un stress enchaîné aléatoire aux différents étages de production, ce procédé de régulation étant appliqué spécifiquement à une production du type à enchaînement de stress diversifié, c'est-à-dire une production dont les sous-systèmes productifs $S_{i,j}$ ont des caractéristiques de taille et de fiabilité qui sont indépendantes,

- c'est-à-dire que certains des sous-systèmes productifs $S_{i,j}$ peuvent être de petite taille, aussi bien en termes de sous-flux de production qu'en termes de stress propre,

- fiables à leur échelle, c'est-à-dire que leur coefficient de transmission pour un stress agrégé du même ordre de grandeur que leur stress propre sera faible en moyenne,
- mais tels qu'un stress agrégé important peut amener à un défaut presque certain,

- alors que d'autres sous-systèmes productifs $S_{i,j}$ ont la propriété inverse, c'est-à-dire que

- leur sous-flux de production est élevé ainsi que leur stress propre,

- leur coefficient de transmission a une moyenne élevée mais relativement stable même lorsque le stress agrégé est important ;

- ledit procédé étant **caractérisé en outre en ce que** l'on fixe électroniquement le coefficient de confiance $a_{i,j}$ sous la forme d'une grandeur qui possède au moins deux composantes de coefficient de transmission indépendantes :

- on lie électroniquement une première composante de coefficient de confiance à la taille du sous-système productif $S_{i,j}$,
- et on lie électroniquement une seconde composante de coefficient de confiance à la fiabilité du sous-système productif $S_{i,j}$ relativement à sa taille,

en sorte que

- l'on obtient une estimation plus fiable et précise de la réalité de l'enchaînement des défauts dans la production, ce qui permet une diminution des marges de sécurité et, par voie de conséquence, l'augmentation du flux de production $F(r)$.

4. Procédé selon la revendication 1, de régulation d'un flux $F$ de production industrielle multi-étagée et multi-liaison, visant à optimiser ce flux de production $F$, en agissant sur un paramètre d'action industrielle $(r)$, tout en maîtrisant un impact industriel $I$ résultant d'un stress enchaîné aléatoire aux différents étages de production, ce procédé de régulation étant appliqué spécifiquement à une production dont le facteur environnemental multivarié d'aléa de *production X* est sujet, avec une faible probabilité, à des mouvements très importants et imprévisibles, ledit procédé étant **caractérisé en outre en ce que** (pour constituer électroniquement ledit échantillonnage de l'état de la production selon une méthode pseudo-aléatoire de type " Monte-Carlo ", dont le nombre global de tirages est $Z$), on procède électroniquement par la combinaison historique et « catastrophique » caractéristique suivante :

- on fait le choix (validé par des tests statistiques classiques adéquats) d'un modèle de comportement simultané des différents sous-facteurs d'aléa de production $(X_i)$, (il peut s'agir notamment de lois normales, log-normales ou, plus généralement, d'une distribution des niveaux des sous-facteurs d'aléa de production $(X_i)$ justifiés à partir d'observations notamment historiques de ces aléas), à laquelle on affecte une probabilité standard $P_s$ d'occurrence et pour laquelle on génère électroniquement $Z_s$ échantillons standard pseudo-aléatoires du vecteurs d'état indiciel $x_z = (X_{z,1}, X_{z,2}, ..., x_{z,N})$, [pour $z = 1,...,Z_s$ de valeurs possibles desdits sous-facteurs communs d'aléa indiciel de production $(X_i)$], et on affecte à chacun de ces $Z_s$ dits échantillons standard un dit poids standard $m_s = P_s / Z_s$ ;
- on fait le choix d'une ou plusieurs situations dites *catastrophiques* des différents sous-facteurs d'aléa de production $(X_i)$, voire de sous-familles de situations catastrophiques dont on définit les caractéristiques de moyenne et de dispersion,

- soit dans l'absolu,
- soit par rapport aux caractéristiques de la distribution issue de l'analyse de l'enregistrement historique

- à laquelle on affecte une probabilité $P_c$ d'occurrence (ou des probabilités $(P_{c1},...,P_{cn})$ s'il y a plusieurs situations catastrophiques) et pour laquelle on génère électroniquement $Z_c$ échantillons standard pseudo-aléatoires du vecteurs d'état indiciel $X_z = (x_{z,1}, x_{z,2},...,x_{z,N})$, [$z = 1,...,Z_s$ de valeurs possibles desdits sous-facteurs communs d'aléa indiciel de production $(X_i)$] (ou des sous-séries composées de $Z_{c1},...,Z_{cn}$ échantillons) et on affecte à chacun de ces $Z_c$ dits échantillons standard un dit poids catastrophique $m_c = P_c / Z_c$ (ou des poids $m_{c1},...,m_{cn}$) ;
- on détermine électroniquement, pour chacun des $Z = Z_p + Z_{c1} +...+ Z_{cn}$ échantillons pseudo-aléatoires dudit vecteur spécifique d'état indiciel $x_z$, et en fonction dudit paramètre d'action $(r)$, le niveau correspondant de l'impact industriel multi-valué $I(x_z, T)(r)$,
- on ordonne et on regroupe électroniquement les $Z$ résultats, et, pour chaque composante élémentaire d'impact $I_h$, on comptabilise électroniquement, pour chaque valeur V que peut atteindre la composante $I_h$, le poids $Z_{ph}(V)$ desdits échantillons électroniques [somme des poids des échantillons électroniques pour lesquels ladite composante d'impact $I_h(x_z,T)(r)$ dépasse (vers le haut ou vers le bas, selon le type 1 ou 2 de production à contrôler) la valeur V multipliée par le poids $m_s$ ou $m_c$ associé] et donc on calcule électroniquement la *pseudo-probabilité* $p'_h(V) = Z_{ph}(V)$ de dépassement de la valeur V par ladite composante d'impact $I_h$,

puis de manière classique

- on en déduit électroniquement les variations de $V_aR_h(p_h, T)(r)$ pour $p_h$ imposé, et ce en fonction dudit paramètre d'action *(r)*, [définie par $Pr[I_h(X,T)(r) >$ (ou <) $VaR_h] = (1-p_h)$]
- on détermine la multivaleur extrémale, $(r_{max})$ ou $(r_{min})$ selon le type de système, pour laquelle l'estimateur multi-valué *VaR(p,T)(r)* vaut exactement la valeur réglementaire M, et
- on ajuste par un procédé notamment de type *asservissement ou servomoteur* la valeur du paramètre d'action *(r)* à ce niveau (éventuellement multiple) ;

en sorte que

- l'on corrige les biais observés entre la distribution de probabilité réelle de l'aléa $(X_1,...,X_N)$ et celle des valeurs prises durant la période d'enregistrement historique des données,
- si certains événements (aux conséquences graves et dont la probabilité ne peut être négligée) ne se sont pas produits dans la période où cet historique a été enregistré, on impose néanmoins à l'automatisme (3) de contrôle de production d'en tenir compte,
- si, par un phénomène de compensation, la simulation d'un événement catastrophique précis n'engendrait aucun impact industriel important, grâce à la simulation de sous-familles d'événements, on évite cette compensation fortuite et on met en relief le risque réel lié à la catastrophe.

**Claims**

1. Method for regulating a multistage and multi-link industrial production flow F, aiming to optimize this production flow (*F*) by acting on an industrial action parameter (*r*) while managing an industrial impact (*I*) resulting from a chained random stress in the various stages of production, this regulating method being applied specifically to multistage and multi-link production, that is to say production:

   - composed of a plurality of production stages denoted $E_1$, ---, $E_m$.
   - each production *stage $E_i$* of which is composed of productive subsystems $S_{i,j}$,
   - receiving one or more production subflows $F_{i,j,k}$ from one or more subsystems $S_{i-1,k}$ of the preceding stage $E_{i-1}$ (except the first i = 1),
   - and transmitting one or more production subflows $F_{i+1,j,k'}$ to one or more subsystems $S_{i+1,k'}$ of the next stage $E_{i+1}$ (except the last stage *i = m),*
   - the production subflows $F_{i,j,k}$ of which can be controlled with the aid of an industrial action parameter *(r),* which is optionally multivariate *(r)* = *(r_1,---,r_n),*
   - and the (overall) industrial production flow *F(r)* of which results from the combination of the production subflows $F_{i,j,k}$, this regulating method being applied specifically to or the type with chained random stress, i.e. production:

     - having a (generally detrimental) industrial impact *I(X, T)(r)* which is optionally multivariate *(I)* = *(I_1,..., I_H),*
     - needing to be managed (in particular for statutory reasons) in a time horizon T,
     - and which is the résultant of a cascade chain of aggregate *stresses* $W_{i,j}$ (measureable phenomenon) experienced by each of the productive subsystems $S_{i,j}$,

   the said industrial impact *I (X, T)* (r) of which depends;

   - strictly monotonically (increasing or decreasing) on the aggregate stresses $W_{i,j}$ of the subsystems $S_{i,j}$ in the various production stages $E_i$, at least one of the elementary impact components $I_h$ depending on the aggregate stresses $W_{m,j}$ of the subsystems $S_{m,j}$ of the last production stage $E_m$,
   - on a multivariate environmental factor of production risk (X) = $(X_1,..., X_N)$, each of the $X_i$ being referred to as a production risk subfactor,
   - on the time horizon T,
   - and strictly monotonically (increasing or decreasing, in the same sense as with respect to the aggregate stresses $W_{m,j}$) on the industrial action parameter (*r*) via the aggregate stresses $W_{m,j}$,

   each aggregate stress $W_{i,j}$ of which is container in the system $S_{i,j}$ in nominal mode, but in fault mode may be partially or totally transmitted to the next stage $E_{i+1}$, that is to say each aggregate stress $W_{i,j}$ of which is the resultant (sum):

   - of a stress $W_{i,j}$ internal to the productive subsystem $S_{i,j}$, depending - in a known manner specific to the subsystem - or the multivariate environmental factor of production risk (X) and in a strictly increasing fashion on the industrial action parameter (r), and

- stress $W'_{i,j,k}$ transmitted by some of the productive subsystems $S_{i-1,k}$ of the preceding stage $E_{i-1}$,

each of the transmitted stresses $W'_{i,j,k}$ of which is the combination, manifested in the form of the combination (product),

- of the aggregate stress $W_{i-1,k}$ of the subsystem $S_{i-1,k}$,
- of a constant, or know but nonrandom, linking coefficient $q_{i,j,k}$,
- and of a random transmission coefficient $d_{i-1,k}$ of the productive subsystem $S_{i-1,k}$, varying between 0 and 1, whose elementary transmission probability distribution $Pr_{i,j}(X, T, r, W_{i,j}, a_{i,j})$ of the subsystem $S_{i,j}$ is known and depends

- on the multivariate production risk factor $X$,
- on the time interval $T$,
- on the industrial action parameter $r$,
- on the stress $W_{i,j}$ and
- on an optionally multivariate confidence coefficient $a_{i,j}$ intrinsic to the productive subsystem $S_{i,j}$,

- and the characteristics of which result in particular, but not exclusively, from a historical analysis of the fault of the productive subsystems, the production configuration of which may be
- either *branching* - for each of the subsystems $S_{i,k}$ of a stage $E_i$, one of the linking coefficients $q_{i+1,j,k}$, = 1 and the others $q_{i+1,j',k}$ are zero, which corresponds to the case in which a productive system of the stage $E_i$ can transmit its stress $W_{i,k}$ only to a single productive subsystem of the next stage $E_{i+1}$,
- or in the more general case *matricial*, in which case each coefficient $q_{i,j,k}$ can take any value,

the said transmission coefficients $d_{i,j}$ of which may be

- either *binary* - they only take the values 0 or 1, that is to say a productive subsystem is either faulty or not faulty, but there is no partial fault - in which case the elementary fault probability distribution $Pr_{i,j}(X,T,r,W_{i,j},a_{i,j})$ of each subsystem $S_{i,j}$ reduces to a single number $p_{i,j}(X, T, r, W_{i,j}, a_{i,j})$ which is the probability that a fault occurs (i.e. $d_{i,j}$ = 1),
- or in the more general case *arbitrary* - that is to say they can take many value between 0 and 1, partial faults are possible and the elementary fault probability distribution $Pr_{i,j}(X, T, r, W_{i,j, ai,j})$ of each subsystem $S_{i,j}$ is a positive function defined on the interval [0,1] of the possible values of the transmission coefficient,

this production control method specifically being employed in the case:

- in which the variations of the subrisks $X_i$ over the time interval T constituting the said multivariate environmental risk factor $X$

- are quantifiable by a known joint probability law $Prob(x_1,...x_N)$, $x_i$ being the generic state which the subrisk $X_i$ can take,
- and in general their characteristics, in particular mean, variance and correlations, as well as extreme behaviours, result from the statistical analysis of a historical record of the subrisks $X_i$

- and in which the elementary impact components $I_h(X,T)$ $(r)$ of the said industrial impact $I(X,T)$ $(r)$ of the production flow $F(r)$ must not cross nuisance levels $M_h$ either upwards (type 1) or downwards (type 2), this being with a probabilistic industrial reliability $Prob [I_h (X, T) (r) < M_h] > p_h$ (type 1) or $Prob[I_h(X,T) (r) > M_h] > p_h$ (type 2), the said nuisance levels $M_h$ and the probabilities $p_h$ being imposed in particular by statute;

this method specifically being of the type consisting, in the known fashion:

- in electronically performing the most reliable sampling possible, specifically as a function of the industrial action parameter $(r)$ in the time interval $(T)$, of the production status consisting:

- of the values which the risk subfactors $X_i$ can take,
- of the stresses $W_{i,j}$ of the productive subsystems $S_{i,j}$,
- of their transmission coefficients $d_{i,j}$,
- of the elementary impact coefficients $I_h (X, T) (r)$ ,

- of the production subflows $F_{i,j,k}(r)$,
- of the production flow $F(r)$

- in electronically generating, still for the time horizon $T$, specifically as a function of the possible values of the level of the industrial action parameter ($r$) - action loop (5) of the production control automation (3) - the maximal multivariate impact estimator with multivariate probability threshold ($p$) = ($p_1,...,p_H$), defined as the vector VaR ($p,T$) ($r$) of the limits $VaR_h$ $(p_h, T)$ ($r$) which the said elementary impact components $I_h(X,T)$ ($r$) will cross (upwards or downwards, depending on the type of system) only with a probability ($1 - pH$), that is to say $Prob[I_h(X,T)$ ($r$) > $VaR_h(p_h, T)$ ($r$)] = ($1 - p_H$) (type 1) or $Prob[I_h$ ($X,T$) ($r$) < $VaR_h$ ($p_h, T$) ($r$)] = ($1 - p_H$) (type 2),

- and in regulating over time - feedback loop (6) of the production control automation (3) - the level of the industrial action parameter ($r$) to the extremal multivariate value ($r_{max}$) or ($r_{min}$) keeping the said effect estimator $VaR(p,T)$ ($r$) inside its authorized nuisance level $M$, that is to say for each index $h$, $VaR_h(p_h, T)$ ($r_{max\ or\ min}$) < $M_h$ (type 1) or $VaR_h$ ($p_h, T$) ($r_{max\ or\ min}$) > $M_h$ (type 2), in order to make the industrial production level $F(r)$ extremal but at a compatible level for compliance with the said statutory nuisance control condition $Prob$ [$I_h(X, T)$ ($r$) > $M_h$] $\simeq p_h$, (type 1), $Prob[I_h(X, T)$ ($r$) < $M_h$] = $p_h$ (type 2),

this method furthermore being specifically of the type consisting in electronically performing a said sampling of the production status according to a pseudorandom method of the "Monte Carlo" type, the overall number of data points of which is $Z$ and, in order to do so, generally proceeding in the following way:

- in making a selection (validated by appropriate conventional statistical tests) of a simultaneous behaviour model of the various production risk subfactors ($X_i$) (this may in particular involve normal or log-normal laws, or more generally a distribution of the levels of the production risk subfactors ($X_i$), which are justified on the basis of observations, in particular historical observations, of these risks),
- then, secondarily (with a view to accelerating the speed of the control loop, and therefore improving the performance and the reliability of the control automation (3) by reducing the horizon $T$) in currying out a principal component analysis (PCA) of the various risk subfactors, that is to say in considering the relationships which express the behaviour of these production risk subfactors ($X_i$) as a function of mutually independent common risk factors, in the form of a random multi-valued production environment indicial risk factor ($Y$) = ($Y_1, Y_2,... ...Y_G$), the ($Y_g$) being termed common indicial production risk subfactors, generally with G << N,
- then, on the basis on the one hand of the said behaviour model of the various production risk subfactors ($X_i$) and the distribution parameters of the indicial risk subfactors ($Y_j$), in electronically constructing according to the Monte Carlo method:

- either a number $Z$ of pseudorandom samples of state vectors $x_z = (x_{z,1},x_{z,2},...,x_{z,N})$, $z = 1,..,Z$, of possible values of the said production risk subfactors ($X_i$) [this electronic generation is carried out on the basis of parameters describing each of the said risk subfactors $X_i$ taken individually, but also on the basis of correlations linking them together, in particular according to the known decomposition methods of Cholesky and "singular values"],
- or, when PCA is carried out, a number $Z$ of pseudorandom samples of indicial state vectors $y_z = (y_{z,1}, y_{z,2},...,y_{z,G})$, $z = 1,...,Z$, of possible values of the said common indicial production risk subfactors ($Y_g$) then in electronically determining, for each pseudorandom sample of the said specific indicial state vector $y_z$, the corresponding value of the corresponding multivariate risk factor ($x_z$) = ($x_{z,1},x_{z,2},...,x_{z,N}$), according to the components of the principal component analysis,

- in electronically determining, for each pseudorandom sample of the said specific indicial state vector $x_z$ and as a function of the said action parameter ($r$), the corresponding level of the multi-valued industrial impact $I(x_z, T)$ ($r$),
- in electronically ordering and grouping the $Z$ results and, for each elementary impact component $I_h$, in electronically counting for each value $V$ which the component $I_h$ can reach the number $Z_h$ ($V$) of the said electronic samples for which the said impact component $I_h(x_z, T)$ (r) crosses the value $V$ (upwards or downwards, depending on the type 1 or 2 of production to be controlled) and therefore in electronically calculating the pseudo-probability $p'_h(V) = Z_h(V)/Z$ of the value $V$ being crossed by the said impact component $T_h$,
- and in electronically deducing the variations of $VaR_h$ ($p_h, T$) ($r$) for a fixed $p_h$, specifically as a function of the said action parameter ($r$), [defined by $Pr[I_h(X,T)(r) >$ (or <) $VaR_h] = (1 - p_H)$]
- in determining the extremal multivalue, ($r_{max}$) or ($r_{min}$) depending on the type of system, for which the multi-valued estimator $VaR(p,T)$ ($r$) is exactly equal to the statutory value M and adjusting then value of the action parameter (r) to this (optionally multiple) level, in particular by a method of the slaving or servomotor type,

the said method being **characterized in that**, in order to electronically generate the elementary impact components $I_h(X_z, T)$ ($r$) corresponding to each sample of the risk $x_z$, the level of the aggregate stresses $W_{z,i,j}$ of each of the productive subsystems $S_{i,j}$ is electronically determined for each pseudorandom sample of the said multivariate risk factor ($x_z$), and specifically as a function of the industrial action parameter ($r$), by an inductive method (11) starting from the first stage $E_1$ to the last $E_m$, that is to say:

- starting from the first stage $E_1$, the level of the said intrinsic stress $W_{1,j}(x_z)$ of each of the subsystems $S_{i,j}$ in stage $E_1$ of the industrial production is measured,

   a) only for the stage $E_1$ in question, the intrinsic stress $W_{1,j}(X_z)$ of each of the subsystems $S_{1,j}$ with the aggregate stress $W_{z,1,j}$ is determined,
   b) then pseudorandom veneration of the said transmission coefficient $d_{z,1,j}$ of each of the productive subsystems $S_{1,j}$ of stage $E_1$ is carried out electronically, following the said elementary fault probability distribution $Pr_{1,j}(x_z, T, r, W_{z,1,j}, a_{1,j})$ of the productive subsystem $S_{1,j}$, i.e. a pseudorandom number $u_{z,1,j}$ is electronically generated in the interval [0,1], and the inverse partition function $F_{1,j}(x_z, T, r, W_{z,1,j}, a_{1,j})(u_{z,1,j})$ of the elementary fault probability $Pr_{1,j}(x_z, T, r, W_{z',1,j}, a_{1,j})$ of the productive subsystem $S_{1,j}$ is applied to it electronically,
   c) the level of the said intrinsic stress $W_{2,k}(x_z)$ of each of the subsystems $S_{2,k}$ in stage $E_2$ of the industrial production is measured,
   d) the said aggregate stress $W_{z,2,k}$ of each subsystem $S_{2,k}$ of stage $E_2$ is evaluated by the formula:

$$W_{z,z,k} = W_{2,k}(x_z) + S_j W'_{z,2,j,k} = W_{2,k}(x_z) + S_j W_{z,1,j}(x_z) \times d_{z,1,j} \times q_{2,j,k}$$

- these operations (b to d) are repeated from stage to stage until the aggregate stresses $W_{z,m,j}$ of the productive subsystems $S_{m,j}$ of stages are obtained,
- and the multivariate industrial impact $I(x_z, T)$ ($r$) linked to the sample of index $z$ is deduced therefrom;

such that, for each embedded Monte Carlo sample consisting of the multivariate environmental risk factor $x_z$ and the output transmission coefficients $d_{z,i,j}$:

- the industrial impact $I$ is measure by jointly taking into account the cascade chain of the stresses $W_{z,i,j}$ in each of the production stages and the random nature of the transmission coefficients $d_{z,i,j}$,
- and a more precise measure of the probability of crossing a given level $V$ of the impact $I(r)$, and therefore of the maximal impact estimator $VaR(p, T)$ ($r$), is taken therefrom

so that:

- the effective frequencies of crossing the limits allowed for the elementary impact components $I_h$ are closer to the target values $(1-p_h)/T$,
- which makes it possible to reduce the industrial safety margins to be applied in terms of the resistance $M$, and consequently to increase the production flow $F(r)$ complying with a given statute,
- more efficient production control automation (3) is constructed by virtue of this control method.

2. Method according to Claim 1 for regulating a multistage and multi-link industrial production flow $F$, aiming to optimize this production flow $F$ by acting on an industrial action parameter ($r$) while managing an industrial impact ($I$) resulting from a chained random stress in the various stages of production, the said method being furthermore **characterized in that** the transmission coefficients $d_{z,i,j}$ of the productive subsystem $S_{i,j}$ are electronically forced to be higher when the aggregate stresses $W_{z,i,j}$ are higher, and this is embodied:

- by the fact that, for an arbitrary threshold $d < 1$, the probability law $Pr_{i,j}(x_z, T, r, W_{z,i,j}, a_{i,j})[d_{z,i,j} > d]$ is electronically set to increase with the value of the aggregate stress $W_{z,i,j}$,
- and/or the parameters describing the inverse partition function $F_{i,j}(x_z, T, r, W_{z,i,j}, a_{i,j})(u_{z,i,j})$ are electronically set so that it is an increasing function of the parameter $W_{z,i,j}$, all the other parameters and variables, including $u_{z,i,j}$, being fixed,

such that:

- in each stage of production, a greater probability of transmitting a given proportion of the stress to the higher stage is induced,
- better account is taken of the fact that, in the majority of cases, the high transmission coefficients occur precisely when the stress is great, leading to a substantial increase in the average level of the stress transmitted to the high stage, and consequently in the value of the induced effect overall,

so that:

- one of the faults of the conventional control systems, which by not complying with this complementary method lead to a significant under-evaluation of the number of cases in which the industrial impact crosses the allowed limit value $M$, is corrected,
- and one of the faults associated with the conventional control systems, which in order to comply with industrial standards trend to use larger safety margins and therefore to reduce the production flow, is avoided.

3. Method according to Claim 1 for regulating a multistage and multi-link industrial production flow $F$, aiming to optimize this production flow $F$ by acting on an industrial action parameter ($r$) while managing an industrial impact ($I$) resulting from a chained random stress in the various stages of production, this regulating method being applied specifically to production of the type with a diversified stress, that is to say production whose productive subsystems $S_{i,j}$ have size and reliability characteristics which are independent,

- that is to say some of the productive subsystems $S_{i,j}$ may be of small size, both in terms of production subflow and in terms of intrinsic stress,

- reliable on their scale, that is to say their transmission coefficient for an aggregate stress of the same order of magnitude as their intrinsic stress will be low on average,
- but such that a large aggregate stress can lead to an almost certain fault,

- whereas other productive subsystems $S_{i,j}$ have the opposite property, that is to say

- their production subflow is high, and so is their intrinsic stress,
- their transmission coefficient has a high average but remains relatively stable even when the aggregate stress is large;

- the said method being furthermore **characterized in that** the confidence coefficient $a_{i,j}$ is electronically set in the form of a quantity which has at least two independent transmission coefficient components:

- a first confidence coefficient component is linked to the size of the productive subsystem $S_{i,j}$,
- and a second confidence coefficient component is linked to the reliability of the productive subsystem relative to its size,

so that

- a more reliable and precise estimate of the real chain of the faults in production is obtained, which makes it possible to reduce the safety margins and consequently to increase the production flow $F(r)$.

4. Method according to Claim 1 for regulating a multistage and multi-link industrial production flow $F$, aiming to optimize this production flow $F$ by acting on an industrial action parameter ($r$) while managing an industrial impact ($I$) resulting from a chained random stress in the various stages of production, this regulating method being applied specifically to production whose multivariate environmental factor of production risk $X$ is subject with a low probability to very large and unpredictable movements, the said method being furthermore **characterized in that** (in order to electronically construct the said sampling of the status of the production according to a pseudorandom method of the "Monte Carlo" type, the overall number of data points of which is $Z$) the following historical and "catastrophic" combination characteristic is carried out electronically:

- a selection is made (validated by appropriate conventional statistical tests) of a simultaneous behaviour model of the various production risk subfactors ($X_i$) (this may in particular involve normal or log-normal laws, or more generally a distribution of the levels of the production risk subfactors ($X_i$), which are justified on the basis of observations, in particular historical observations, of these risks), to which a standard occurrence probability

$P_s$ is assigned and for which $Z_s$ pseudorandom standard samples of the indicial state vectors $x_z = (x_{z,1}, X_{z,2},..., x_{z,N})$ are generated electronically [for $z = 1,...,Z_s$ of possible values of the said common indicial production risk subfactors $(X_i)$], and a said standard weight $m_s = P_s/Z_s$ is assigned to each of the said $Z_s$ standard samples;

- a selection is made of one or more so-called catastrophic situations of the various production risk subfactors $(X_i)$, or of subfamilies of catastrophic situations whose mean and dispersion characteristics are defined,
- either in absolute terms,
- or relative to the characteristics of the distribution obtained by analyzing the historical record
- to which an occurrence probability $P_c$ is assigned (or probabilities $(P_{c1},...,P_{cn})$ if there are a plurality of catastrophic situations) and for which $Z_c$ pseudorandom standard samples of the indicial state vectors $x_z = (x_{z, 1}, X_{z,2},...,x_{z,N})$ are generated electronically [$z = 1,-..,Z_s$ of possibles values of the said common indicial production risk subfactors $(X_i)$] (or subseries composed of $Z_{c1},..., Z_{cn}$ samples) and a said catastrophic weight $m_c = P_c/Z_c$ (or weights $m_{c1}, ..., m_{cn}$) is assigned to each of the said $Z_c$ standard samples;
- for each of the $Z = Z_{p+}Z_{c1} +...+Z_{cn}$ pseudorandom samples of the specific indicial state vector $x_z$, and as a function of the said action parameter $(r)$, the corresponding level of the multi-valued industrial impact $I(x_z, T)$ $(r)$ is determined electronically,
- the z results are ordered and grouped electronically and, for each elementary impact component $I_h$, the weight $Z_{ph}(V)$ of the said electronic samples is Counted for each value $V$ which the component $I_h$ can reach [sum of the weights of the electronic samples for which the said impact component $I_h(x_z, T)$ $(r)$ crosses (upwards or downwards, depending on the type 1 or 2 of production to be controlled) the value $V$ multiplied by the associated weight $m_s$ or $m_c$)] and therefore the pseudo-probability $p'_h(V) = Z_{ph}(V)$ of the value $V$ being crossed by the said impact component $I_h$ is calculated electronically,

then, conventionally,

- the variations of $VaR_h(p_h, T)$ $(r)$ for a fixed $p_h$ are electronically deduced therefrom, and this is done as a function of the said action parameter $(r)$, [defined by $Pr[I_h(X, T)$ $(r) >$ (or $<$) $VaR_h] = (1 - p_H)$]
- the extremal multivalue, $(r_{max})$ or $(r_{min})$ depending on the type of system, is determined for which the multi-valued estimator $VaR(p, T)(r)$ is exactly equal to the statutory value M and
- the value of the action parameter $(r)$ is adjusted to this (optionally multiple) level, in particular by a method of the *slaving or servomotor* type;

such that

- the biases observed between the real probability distribution of the risk $(X_1,---,X_N)$ and that of the values taken during the historical record period of the data is corrected,
- if certain events (which have serious consequences and the probability of which cannot be neglected) did not occur in the period over which this history was recorded, the production control automation (3) is nevertheless forced to take them into account,
- if, because of a compensation phenomenon, the simulation of a precise catastrophic event does not generate any significant industrial impact, owing to the simulation of subfamilies of events this accidental compensation is avoided and the real risk linked to the catastrophe is revealed.

**Patentansprüche**

1. Verfahren zur Regulierung eines Flusses F industrieller Mehrstufen- und Mehrverbindungs-Produktion mit dem Ziel, diesen Prcduktionsfluss (F) durch Einwirken auf einen Parameter industrieller Aktion (r) zu optimieren, bei gleichzeitiger Beherrschung einer industriellen Wirkung (I), die aus einer verknüpften Zufallsbeanspruchung in den verschiedenen Stufen der Produktion resultiert,

wobei dieses Regulierungsverfahren speziell an eine Mehrstufen- und Mehrverbindungs-Produktion angewandt wird, d.h. an eine Produktion;

- die aus mehreren mit $E_1, ..., E_m$ bezeichneten Produktionsstufen zusammengesetzt ist,
- von der jede Produktionsstufe $E_i$ aus produktiven Teilsystemen $S_{ij}$ zusammengesetzt ist,
- die einen oder mehrere Produktions-Teilflüsse $F_{ij,k}$ von einem oder mehreren Teilsystemen $S_{i-1,k}$ der vorhergehenden Stufe $E_{i-1}$ (außer der ersten i = 1) empfängt,
- und die einen oder mehrere Produktions-Teilflüsse $F_{i+1j,k'}$ an eines oder mehrere Teilsysteme $S_{i+1,k}$ der folgenden Stufe $E_{i+1}$ (außer an die letzte Stufe i = m) überträgt,

- deren Froduktions-Teilflüsse $F_{ij,k}$ mit Hilfe eines Parameters industrieller Aktion (r), ggf, multivariat (r) = $(r_1, ..., r_n)$, kontrolliert werden können,
- und deren (globaler) industrieller Produktionsfluss F (r) aus der Kombination der Produktions- Teilflüsse $F_{ij,k}$ resultiert,

wobei dieses Regulierungsverfahren spezifisch an eine Produktion vom Typ mit verknüpfter Zufallsbeanspruchung angewandt wird, d.h. eine Produktion:

- mit einer industriellen Wirkung I(X,T)(r) (allgemein schädlich), ggf. multivariat (I) = $(I_1, .... I_H)$,
- die in einem Zeithorizont T beherrscht werden muss (insbesondere aus vorschriftsgemäßen Gründen),
- und die die Resultierende einer Kaskadenverknüpfung von aggregierten Beanspruchungen $W_{ij}$ (messbares Phänomen) ist, die von jedem der produktiven Teilsysteme $S_{ij}$ erfahren werden,

deren industrielle Wirkung I(X,T) (r) abhängt:

- global monoton (zunehmen oder abnehmend) von den aggregierten Beanspruchungen $W_{ij}$ der Teilsysteme $S_{ij}$ in den verschiedenen Froduktionsstufen $E_i$, wobei mindestens eine der elementaren Wirkungskomponenten $I_h$, von den aggregierten Beanspruchungen $W_{mj}$ der Teilsysteme $S_{mj}$ der letzten Produktionsstufe $E_m$ abhängt,
- von einem multivariaten Umgebungsfaktor einer Produktionszufälligkeit (X) = $(X_1, ..., X_N)$ , wobei jeder der $X_i$ Produktionzufälligkeits-Teilfaktoren genannt wird,
- vom Zeithorizont T,
- und global monoton (zunehmend oder abnehmend, in gleicher Richtung wie bezüglich der aggregierten Beanspruchungen $W_{mj}$) vom Parameter industrieller Aktion (r) mittels der aggregierten Beanspruchungen $W_{mj}$,

von der jede aggregierte Beanspruchung $W_{ij}$ im Nennmodus auf der Ebene des Systems $S_{ij}$ enthalten ist, aber im Fehlermodus teilweise oder vollständig zur folgenden Stufe $E_{i+1}$ übertragen werden kann, d.h. von der jede aggregierte Beanspruchung $W_{ij}$ die Resultierende (Summe) ist von:

- einer für das produktive Teilsystem $S_{ij}$ spezifischen Beanspruchung $W_{ij}$, die - in bekannter und für das Teilsystem spezieller Weise vom multivariaten Umgebungsfaktor einer Produktionszufälligkeit (X) sowie global zunehmend vom Parameter industrieller Aktion (r) anhängt, und
- einer von bestimmten der produktiven Teilsysteme $S_{i-l-k}$ der vorergehenden Stufe $E_{i-l}$ übertragenen Beanspruchung $W'_{ij,k}$,

von der jede der übertragenen Beanspruchungen $W'_{ij,k}$ die Kombination, die sich in Form der Kombination (Produkt) realisiert, ist von:

- der aggregierten Beanspruchung $W_{i-l,k}$ des Teilsystems $S_{i-l,k}$,
- einem konstanten oder bekannten, aber nicht zufälligen, Verbindungskoeffizienten $q_{ij,x}$,
- und einem Zufallsübertragungskoeffizienten $d_{i-l,k}$ des produktiven Teilsystems $S_{i-l,k}$, der zwischen 0 und 1 variiert, dessen Wahrscheinlichkeitsverteilung der Elementarübertragung $Pr_{ij}(X, T, r, W_{ij}, \alpha_{ij})$ des produktiven Teilsystems $S_{ij}$ bekannt ist und abhängt von

  - dem multivariaten Faktor X einer Produktionszufälligkeit,
  - dem Zeitintervall T,
  - dem Parameter industrieller Aktion r,
  - der Beanspruchung $W_{ij}$ und
  - einem Vertrauerskoeffizienten $\alpha_{ij}$, ggf. multivaluiert, der für das produktive Teilsystem $S_{ij}$ spezifisch ist,

- und deren Merkmale insbesondere, aber nicht ausschließlich, aus einer historischen Analyse des Fehlers der produktiven Teilsysteme resultieren,

deren Produktionskonfiguration sein kann:

- entweder *verzweigt* - für jedes Teilsystem $S_{i,k}$ einer Stufe $E_i$ hat einer der Verbindungskoeffizienten den Wert $q_{i,1,j,k} = 1$ und die anderen $q_{i+l,j',k}$ sind null, was dem Fall entspricht, in dem ein produktives Teilsystem der Stufe $E_i$ seine Beanspruchung $W_{i,k}$ nur an ein einziges produktives Teilsystem der folgenden Stufe $E_{i+l}$ übertragen kann -,

- oder, im allgemeineren Fall, *matrixförmig,* und in diesem Fall kann jeder Verbindungskoeffizient $q_{ij,k}$ jeden Wert annehmen,

deren Übertragungskoeffizienten $d_{ij}$ sein können

- entweder *binär* - sie nehmen nur die Werte 0 und 1 an, d.h. dass ein produktives Teilsystem fehlt oder nicht fehlt, aber es gibt keinen Teilfehler

- und in diesem Fall reduziert sich die Wahrscheinlichkeitsverteilung eines Elementarfehlers $Pr_{ij}(X, T, r, W_{ij}, \alpha_{ij})$ jedes produktiven Teilsystems $S_{ij}$ auf eine einzige Zahl $p_{ij}(X, T, r, W_{ij}, \alpha_{ij})$, die die Wahrscheinlichkeit ist, dass der Fehler stattfindet (d.h- $d_{ij} = 1$) -,

- oder, im allgemeinsten Fall, beliebig - d-h., dass sie jeden Wert zwischen 0 und 1 annehmen können, die Teilfehler sind möglich und die Wahrscheinlichkeitsverteilung eines Elementarfehlers $Pr_{ij}(X, T, r, W_{ij}, \alpha_{ij}$ jedes produktiven Teilsystems $S_{ij}$ ist eine positive Funktion, die im Intervall [0,1] der möglichen Werte des Übertragungskoeffizienten definiert ist - ,

wobei dieses Produktionskontrollverfahren speziell in dem Fall angewandt wird, in dem:

- die Veränderungen über das Zeitintervall T der Teilzufälligkeiten $X_i$, die den multivariaten Faktor X einer Umgebungszufälligkeit bilden,

- durch ein bekanntes Gesetz der Verbundwahrscheinlichkeit Prob $(x_i, ..., x_v)$ quantifizierbar sind, wobei $x_i$ der generische Zustand ist den die Teilzufälligkeit $X_i$ annehmen kann,
- und bei denen im Allgemeinen die Eigenschaften insbesondere des Mittelwerts, der Varianz und der Korrelationen, sowie von extremen Verhaltensweisen, aus der statistischen Analyse einer historischen Aufzeichnung der Teilzufälligkeiten $X_i$ resultieren,
- und die elementaren Wirkungskomponenten $I_h(X, T)(r)$ der industriellen Wirkung $I(X,T)(r)$ des Produktionsflusses F(r) Schädigungspegel $M_h$ weder nach oben (Typ 1), noch nach unten (Typ 2), überschreiten dürfen, dies mit einer probabilistischen industriellen Zuverlässigkeit Prob$[I_h(X, T)(r) < M_h] p_h$ (Typ 1) , oder Prob $[I_h(X,T)(r) > M_h] > p_h$ (Typ 2), wobei die Schädigungspegel $M_h$ und die Wahrscheinlichkeiten $p_h$ insbesondere vorschriftsgemäß vorgeschrieben sind;

wobei dieses Verfahren speziell von dem Typ ist, der in bekannter Weise darin besteht:

- elektronisch eine möglichst genaue Abtastung, und dies in Abhängigkeit vom Parameter industrieller Aktion (r), im Zeitintervall (T), des Zustands der Produktion durchzuführen, der besteht aus:

- den Werten, die die Zufälligkeits-Teilfaktoren $X_i$ annehmen können,
- den Beanspruchungen $W_{ij}$ der produktiven Teilsysteme $S_{ij}$,
- ihren Übertragungskoeffizienten $d_{ij}$,
- den elementaren Wirkungskomponenten $I_h(X, T)(r)$,
- den Produktions-Teilflüssen $F_{ij,k}(r)$,
- dem Produktionsfluss F(r),

- elektronisch, immer noch für den Zeithorizont T, und dies in Abhängigkeit von den möglichen Werten des Pegels des Parameters industrieller Aktion (r) - Aktionsschleife (5) der Produktionskontrollautomatik (3) - die multivariate Schätzfunktion der maximalen Wirkung mit multivariatem Wahrscheinlichkeitsschwellwert (p) = $(p_i, ...p_H)$ zu erzeugen, definiert als der Vektor VaR (p, T)(r) der Grenzen $VaR_h(p_h, T)(r)$, die die elementaren Wirkungskomponenten $I_h(X,T)(r)$ nur (nach oben oder nach unten je nach dem Systemtyp) mit einer Wahrscheinlichkeit $(1-p_h)$ überschreiten, d.h. Prob$[I_h(X,T)(r) > VaR_h(p_h, T)(r)] = (1-p_h)$ , (Typ 1) oder Prob $[I_h(X, T)(r) < VaR_h(p_h, T)(r)] = (1-p_h)$ (Typ 2),
- und im Lauf der Zeit - Reaktionsschleife (6) der Produktionskontrollautomatik (3) - den Pegel des Parameters industrieller Aktion (r) auf den multivariaten extremalen Wert $(r_{max})$ oder $(r_{min})$ zu regeln, der die Wirkungs-Schätzfunktion VaR (p,T)(r) innerhalb ihres genehmigten Schädigungspegels M hält, d.h. für jeden Index h, $VaR_h(p_h, T)(r_{max}$ oder $r_{min}) <$ Mh (Typ 1), oder $VaR_h(p_h, T)(r_{max}$ oder $r_{min}) >$ Mh (Typ 2) , um den industriellen Produktionspegel F(r) extremal zu machen, jedoch auf einem Pegel, der mit der Beachtung der vorschriftsgemäßen Bedingung der Schädigungskontrolle Prob$[I_h(X, T)(r) > M_h] \geq p_h$ (Typ 1), Prob $[I_n(X,T)(r) < M_h] \geq p_h$

(Typ 2) kompatibel ist,

wobei dieses Verfahren außerdem speziell von dem Typ ist, der darin besteht, elektronisch eine Abtastung des Zustands der Produktion gemäß einer pseudo-zufälligen Methode vom Typ "Monte-Carlo" durchzuführen, deren globale Anzahl von Ziehungen Z ist, und hierzu allgemein folgendemaßen vorzugehen:

- die Wahl (validiert durch adäquate klassische statistische Tests) eines gleichzeitigen Verhaltensmodells der verschiedenen Teilfaktoren der Produktionszufälligkeit ($X_i$) zu treffen, (es kann sich insbesondere um normale Gesetze, lognormale Gesetze, oder allgemeiner um eine Verteilung der Pegel der Teilfaktoren der Produktionszufälligkeit ($X_i$) handeln, die ausgehend von insbesondere historischen Beobachtungen dieser Zufälligkeiten berechtigt sind),
- dann, nachgeordnet (mit dem Ziel, die Geschwindigkeit der Kontrollschleife zu beschleunigen und somit die Leistungen und die Zuverlässigkeit des Kontrollautomatismus (3) zu verbessern, indem der Horizont T reduziert wird) eine Analyse in Hauptkomponenten (ACP) der verschiedenen Zufälligkeits-Teilfaktoren durchzuführen, d.h. die Beziehungen zu betrachten, die das Verhalten dieser Produktionszufälligkeits-Teilfaktoren ($X_i$) ausdrücken, in Abhängigkeit von gemeinsamen Zufälligkeitsfaktoren, die voneinander unabhängig sind, dies in Form eines zufälligen multi-valuierten Index-Zufälligkeitsfaktors einer Produktionsumgebung (Y) = ($Y_1$, $Y_2$, ..., $Y_G$), wobei die ($Y_g$) gemeinsame Produktions-Index-Zufälligkeitsfaktoren genannt werden, mit allgemein G << N,
- dann, ausgehend von dem Verhaltensmodell der verschiedenen Produktionszufälligkeits-Teilfaktoren ($X_i$) und den Verteilungsparametern der Index-Zufälligkeits-Teilfaktoren ($Y_i$), elektronisch gemäß der Monte-Carlo-Methode zu konstruieren,

- entweder eine Anzahl Z von pseudozufälligen Tastproben von Zustandsvektoren $x_z$ = ($x_{z,1}$, $x_{z,2}$, ···, $x_{z,N}$), z = 1, ..., Z möglicher Werte der Produktionszufälligkeits-Teilfaktoren ($X_i$), [diese elektronische Erzeugung wird ausgehend von Parametern, die jeden der Zufälligkeits-Teilfaktoren $X_i$ individuell beschreiben, aber auch ausgehend von den Korrelationen durchgeführt, die diese miteinander verbinden, insbesondere gemäß den bekannten Zerlegungsmethoden von Cholesky und den "singulären Werten"],
- oder, wenn ACP durchgeführt wird, eine Anzahl Z von pseudozufälligen Tastproben von Index-Zustandsvektoren $y_z$ = ($y_{z,1}$, $y_{z,2}$, ..., $y_{z,G}$), z = 1, ..., Z möglicher Werte der gemeinsamen Index-Produktionszufälligkeits-Teilfaktoren ($Y_g$), dann elektronisch, für jede pseudozufällige Tastprobe des speziellen Index-Zustandsvektors $y_z$, den entsprechenden Wert des entsprechenden multivariaten Zufälligkeitsfaktors ($x_z$) = ($x_{z,1}$, $x_{z,2}$, ..., $x_{z,N}$) gemäß den Koeffizienten der Hauptkomponente-Analyse zu bestimmen,

- elektronisch für jede pseudozufällige Tastprobe des speziellen Index-Zustandsvektors $x_2$, und in Abhängigkeit vom Aktionsparameter (r), den entsprechenden Pegel der multi-valuierten industriellen Wirkung $I(x_z,T)(r)$ zu bestimmen,
- die Z Ergebnisse elektronisch zu ordnen und zusammenzufassen, und für jede elementare Wirkungskomponente $I_h$ elektronisch für jeden Wert V, den die Komponente $I_h$ erreichen kann, die Anzahl $Z_h(V)$ der elektronischen Tastproben zu verbuchen, für die die Wirkungskomponente $I_h(x_z,T)(r)$ den Wert V (nach oben oder nach unten, je nach dem Typ 1 oder Typ 2 der zu kontrollierenden Produktion) überschreitet und somit elektronisch die Pseudo-Wahrscheinlichkeit $p'_h(V) = Z_h(V)/Z$ des Überschreitens des Werts V durch die Wirkungskomponente $I_h$ zu berechnen,
- daraus elektronisch die Veränderungen von $VaR_h$ ($_{ph}$, T) (r) für $p_h$ vorgeschrieben abzuleiten, und dies in Abhängigkeit vom Aktionsparameter (r), [definiert durch $Pr[I_h(X,T)(r) > (oder <)VaR_h] = (l-p_h)$]
- den extremalen Multiwert ($r_{max}$) oder ($r_{min}$) gemäß dem Systemtyp zu bestimmen, für den die multivaluierte Schätzfunktion VaR (p,T)(r) genau den vorschriftsgemäßen Wert M hat, und insbesondere durch ein Verfahren des Typs Regelung oder Servomotor den Wert des Aktionsparameters (r) auf diesen Pegel (ggf- mehrfach) einzustellen,

wobei das Verfahren **dadurch gekennzeichnet ist, dass** zur elektronischen Erzeugung der elementaren Wirkungskomponenten $I_h(x_z,T)(r)$ entsprechend jeder Testprobe der Zufälligkeit $x_z$, elektronisch für jede pseudo-zufällige Tastprobe des multivariaten Zufälligkeitsfaktors ($x_z$), und dies in Abhängigkeit vom Parameter industrieller Aktion (r), der Pegel der aggregierten Beanspruchungen $W_{z,ij}$ jedes der produktiven Teilsysteme $S_{ij}$ durch eine induktive Methode (11) ausgehend von der ersten Stufe $E_l$ zur letzten $E_m$ bestimmt wird, d-h-, dass:

- ausgehend von der ersten Stufe $E_1$ der Pegel der spezifischen Beanspruchung $W_{l,j}(x_z)$ jedes der Teilsysteme $S_{ij}$ in der Stufe $E_1$ der industriellen Produktion gemessen wird,

a) nur für die betroffene Stufe $E_l$ die spezifische Beanspruchung $W_{lj}(x_z)$ jedes der Teilsysteme $S_{lj}$ mit der aggregierten Beanspruchung $W_{z,lj}$ bestimmt wird,

b) dann elektronisch eine pseudozufällige Erzeugung des Übertragungskoeffizienten $d_{z,lj}$ jedes der produktiven Teilsysteme $S_{ij}$- der Stufe $E_l$ gemäß der Elementarfehler-Wahrscheinlichkeitsverteilung $Pr_{lj}(x_z, T, r, W_{z,lj}, \alpha_{lj})$ des produktiven Teilsystems $S_{lj}$ durchgeführt wird, d.h. dass elektronisch eine pseudozufällige Zahl $u_{z,lj}$ im Intervall [0,1] erzeugt wird, und daran elektronisch die Funktion der inversen Aufteilung $\Phi_{lj}(x_z, T, r, W_{z,lj}, \alpha_{lj})(u_z, j)$ der Elementarfehler-Wahrscheinlichkeit $Pr_{lj}(x_z, T, r, W_{z,1j}, \alpha_{1j})$ des produktiven Teilsystems $S_{ij}$ angelegt wird,

c) der Pegel der spezifischen Beanspruchung $W_{2,k}(x_z)$ jedes der Teilsysteme $S_{2,k}$ in der Stufe $E_2$ der industriellen Produktion gemessen wird,

d) die aggregierte Beanspruchung $W_{z,2,k}$ jedes Teilsystems $S_{2,k}$ der Stufe $E_2$ elektronisch ermittelt wird durch die Formel:

$$W_{z,2,k} = W_{2,k}(x_z) + \Sigma_j W'_{z,2,j,k} = W_{2,k}(x_z) + \Sigma_j W_{z,1j}(x_z) \times d_{z,ij} \times q_{2j,k}$$

- diese Vorgänge (b bis d) von Stufe zu Stufe wiederholt werden, bis die aggregierten Beanspruchungen $W_{z,mj}$ der produktiven Teilsysteme $S_{mj}$ der Stufe $E_m$ erhalten werden,

- und davon die multivariate industrielle Wirkung $I(x_z,T)(r)$ abgeleitet wird, die mit der Tastprobe mit dem Index z verbunden ist; so dass für jede verschachtelte Monte-Carlo-Tastprobe, die aus dem multivariaten Umgebungs-Zufälligkeitsfaktor $x_z$ und den gesendeten Übertragungskoeffizienten $d_{2,ij}$ besteht:

- die industrielle Wirkung I unter der gemeinsamen Berücksichtigung der Kaskadenverknüpfung der Beanspruchungen $W_{z,ij}$ in jeder der Stufen der produktion und des Zufälligkeitscharakters der Übertragungskoeffizienten $d_{z,ij}$ gemessen wird,

- daraus ein genauerer Messwert der Wahrscheinlichkeit der Überschreitung eines gegebenen Pegels V der Wirkung $I(r)$ und somit der Schätzfunktion maximaler Wirkung $VaR(p,T)(r)$ entnommen wird, derart, dass:

- die effektiven Frequenzen des Überschreitens der genehmigten Grenzen für die elementaren Wirkungskomponenten $I_h$ den Zielwerten $(1-p_h)/T$ näher sind,

- was es ermöglicht, die Spielräume industrieller Sicherheit zu verringern, die an dem Widerstandspegel M anzuwenden sind, und folglich den Produktionsfluss $F(r)$ erhöht, der eine gegebene Reglementierung einhält,

- mit Hilfe dieses Kontrollverfahrens ein wirksamere Kontrollautomatismus (3) der Produktion gebildet wird.

**2.** Verfahren nach Anspruch 1 zur Regulierung eines Flusses F einer industriellen Mehrstufen- und Mehrverbindungs-Produktion mit dem Ziel, diesen Produktionsfluss F durch Einwirkung auf einen Parameter industrieller Aktion (r) zu optimieren, bei gleichzeitiger Beherrschung einer industriellen Wirkung I, die aus einer verknüpften Zufallsbeanspruchung in den verschiedenen Produktionsstufen resultiert, wobei das Verfahren außerdem **dadurch gekennzeichnet ist, dass** elektronisch vorgeschrieben wird, dass die Übertragungskoeffizienten $d_{z,ij}$ der produktiven Teilsysteme $S_{ij}$ höher sind, wenn die aggregierten Beanspruchungen $W_{z,ij}$ größer sind, und dies realisiert wird:

- durch die Tatsache, dass für eine beliebige Schwelle d < 1 elektronisch festgelegt wird, dass das Wahrscheinlichkeitsgesetz $Pr_{ij}(X_z,T,r,W_{z,ij},\alpha_{ij})[d_{z,ij}>d]$ mit dem Wert der aggregierten Beanspruchung $W_{z,ij}$ zunimmt,

- und/oder die Beschreibungsparameter der inversen Verteilungsfunktion $\Phi_{ij}(X_z,T,r,W_{z,ij},\alpha_{ij})(u_{z,ij})$ elektronisch so festgelegt werden, dass sie eine zunehmende Funktion des Parameters $W_{z,ij}$ ist, während alle anderen Parameter und Variablen, einschließlich $u_{z,ij}$, festgelegt sind,

so dass:

- in jeder Stufe der Produktion eine größere Wahrscheinlichkeit der Übertragung eines gegebenen Anteils der Beanspruchung zur höheren stufe induziert wird,

- besser berücksichtigt wird, dass in den meisten Fällen die hohen Übertragungskoeffizienten genau dann auftreten, wenn die Beanspruchung groß ist, was zu einer deutlichen Erhöhung des mittleren Pegels der zur höheren Stufe übertragenen Beanspruchung und folglich des Werts des globalen induzierten Effekts führt,

derart, dass:

- einer der Fehler der klassischen Kontrollsysteme korrigiert wird, die, indem sie dieses komplementäre Verfahren nicht einhalten, zu einer starken Unterbewertung der Anzahl von Fällen führen, in denen die industrielle Wirkung den genehmigten Grenzwert M überschreitet,
- und einer der zugeordneten Fehler dieser klassischen Systeme vermieden wird, die, um die industrielle Normen einzuhalten, dahin tendieren, größere Sicherheitsspielräume zu verwenden und somit den Produktionsfluss zu reduzieren.

3. Verfahren nach Anspruch 1 zur Regulierung eines Flusses F einer industriellen Mehrstufen- und Mehrverbindungs-Produktion mit dem Ziel, diesen Produktionsfluss F durch Einwirkung auf einen Parameter industrieller Aktion (r) zu optimieren, bei gleichzeitiger Beherrschung einer industriellen Wirkung I, die aus einer verknüpften Zufallsbeanspruchung in den verschiedenen Produktionsstufen resultiert, wobei dieses Regulierungsverfahren speziell an eine Produktion vom Typ mit diversifizierter Beanspruchungsverknüpfung angewendet wird, d.h. eine Produktion, deren produktive Teilsysteme $S_{ij}$ Größen- und Zuverlässigkeitsmerkmale haben, die unabhängig sind,

- d.h., dass bestimmte der produktiven Teilsysteme $S_{ij}$ von kleiner Größe sein können, sowohl bezüglich von Produktions-Teilflüssen als auch bezüglich der spezifischen Beanspruchung,

- zuverlässig in ihrem Maßstab, d.h., dass ihr Übertragungskoeffizient für eine aggregierte Beanspruchung der gleichen Größenordnung wie ihre spezifische Beanspruchung im Mittel gering ist,
- aber derart, dass eine große aggregierte Beanspruchung zu einem fast sicheren Fehler führen kann,

- während andere produktive Teilsysteme $S_{ij}$ die umgekehrte Eigenschaft haben, d.h., dass

- ihr Produktions-Teilfluss sowie ihre spezifische Beanspruchung hoch ist,
- ihr Übertragungskoeffizient einen hohen, aber relativ stabilen Mittelwert hat, selbst wenn die aggregierte Beanspruchung groß ist;

- wobei das Verfahren außerdem **dadurch gekennzeichnet ist, dass** der Vertrauenskoeffizient $\alpha_{ij}$ in Form einer Größe elektronisch festgelegt wird, die mindestens zwei unabhängig Übertragungskoeffizient-Komponenten besitzt:

- es wird elektronisch eine erste Vertrauenskoeffizient-Komponente mit der Größe des produktiven Teilsystems $S_{ij}$ verbunden,
- und es wird elektronisch eine zweite Vertrauenskoeffizient-Komponente mit der Zuverlässigkeit des produktiven Teilsystems $S_{ij}$ bezüglich seiner Größe verbunden,

so dass
- eine zuverlässigere und genauere Schätzung der Wirklichkeit der Verknüpfung der Fehler in der Produktion erhalten wird, was eine Verringerung der Sicherheitsspielräume und folglich die Erhöhung des Produktionsflusses F(r) erlaubt.

4. Verfahren nach Anspruch 1 zur Regulierung eines Flusses F einer industriellen Mehrstufen- und Mehrverbindungs-Produktion mit dem Ziel, diesen Produktionsfluss F durch Einwirkung auf einen Parameter industrieller Aktion (r) zu optimieren, bei gleichzeitiger Beherrschung einer industriellen Wirkung I, die aus einer verknüpften Zufallsbeanspruchung in den verschiedenen Stufen der Produktion resultiert, wobei dieses Regulierungsverfahren spezifisch an eine Produktion angewendet wird, deren multivariater Umgebungsfaktor einer Produktionszufälligkeit X mit einer geringen Wahrscheinlichkeit für sehr große und unvorhersehbare Bewegungen anfällig ist, wobei das Verfahren außerdem **dadurch gekennzeichnet ist, dass** (um die Abtastung des Zustands der Produktion gemäß einer pseudozufälligen Methode vom Typ "Monte-Carlo" elektronisch zu bilden, deren globale Anzahl von Ziehungen Z ist) elektronisch durch die folgende charakteristische historische und "katastrophale" Kombination vorgegangen wird:

- es wird die Wahl (validiert durch adäquate klassische statistische Tests) eines Modells des gleichzeitigen Verhaltens der verschiedenen Produktionszufälligkeits-Teilfaktoren ($X_i$) durchgeführt, (es kann sich insbesondere um normale Gesetze, lognormale Gesetze, oder allgemeiner um eine Verteilung der Pegel der Produktionszufälligkeits-Teilfaktoren ($X_i$) handeln, die ausgehend von insbesondere historischen Beobachtungen dieser Zufälligkeiten berechtigt sind), der eine Auftretens-Standard-Wahrscheinlichkeit $P_s$ zugeordnet wird und für die elektronisch $Z_s$ pseudozufällige Standard-Tastproben des Index-Zustandsvektors $x_z = (x_{z,1}, x_{z,2}, ..., x_{z,N})$ [für z = 1, ..., $Z_s$ von möglichen Werten der gemeinsamen Teilfaktoren einer Produktions-Index-Zufälligkeit ($X_i$)] erzeugt werden, und jeder dieser $Z_s$ Standard-Tastproben ein Standardgewicht $m_s = p_s/Z_s$ zugeordnet wird;
- die Wahl einer oder mehrerer katastrophal genannter Situationen der verschiedenen Produktionszufälligkeits-

Teilfaktoren ($X_i$), sogar von Teilfamilien von katastrophalen Situationen, durchgeführt wird, deren Mittelwert- und Streuungs-Merkmale definiert werden,

- entweder im Absolutwert,
- order bezüglich der Merkmale der Verteilung, die aus der Analyse der historischen Aufzeichnung stammt,

- der eine Auftretens-Wahrscheinlichkeit $P_c$ (oder Wahrscheinlichkeiten ($P_{c1}$, ..., $P_{cn}$), wenn es mehrere katastrophale Situationen gibt) zugewiesen wird, und für die elektronisch $Z_c$ pseudozufällige Standard-Tastproben des Index-Zustandsvektors $x_z = (x_{2,1}, x_{r,2}, ..., x_{z,N})$, [$z = 1, ..., Z_s$ von möglichen Werten der gemeinsamen Teilfaktoren einer Produktions-Index-Zufälligkeit ($X_i$)] (oder aus $Z_{c1}$, ..., $Z_{cn}$ Tastproben zusammengesetzte Teilreihen) erzeugt werden, und jeder dieser Standard-Tastproben $Z_c$ ein so genanntes katastrophales Gewicht $m_c = P_c/Z_c$ (oder Gewichte $m_{c1}$, ..., $m_{cn}$) zugeordnet wird;
- elektronisch für jede der $Z = Z_p + z_{c1} + ... + Z_{cn}$ pseudo-zufälligen Tastproben des spezifischen Indexzustand-Vektors $x_z$, und in Abhängigkeit vom Aktions-Parameter (r), der entsprechende Pegel der multi-valuierten industriellen Wirkung $I(x_z, T)$ (r) bestimmt wird,
- die Z Ergebnisse elektronisch geordnet und zusammengefasst werden, und für jede elementare Wirkungskomponente $I_h$ für jeden Wert V, den die Komponente $I_h$ erreichen kann, das Gewicht $Z_{ph}(V)$ der elektronischen Tastproben [Summe der Gewichte der elektronischen Tastproben, für die die Wirkungskomponente $I_h$ ($x_2$,T) (r) (nach oben oder nach unten, je nach dem Typ 1 oder 2 der zu kontrollierenden Produktion) den Wert V multipliziert mit dem zugeordneten Gewicht $m_s$ oder $m_c$ überschreitet] elektronisch verbucht wird, und somit die Pseudowahrscheinlichkeit $p'_h(V) = Z_{ph}(V)$ des Überschreitens des Werts V durch die Wirkungskomponente $I_h$ elektronisch berechnet wird, dann in klassischer Weise
- daraus elektronisch die Variationen von $VaR_h$ ($p_h$,T) (r), für $p_h$ vorgeschrieben, abgeleitet werden, und dies in Abhängigkeit von dem Aktionsparameter (r), [definiert durch $Pr[I_h(X,T)$ (r) > (oder <) $VaR_h] = (1-p_h)$]
- der extremale Multiwert, ($r_{max}$) oder ($r_{min}$) je nach dem Systemtyp, bestimmt wird, für den die vielwertige Schätzfunktion VaR(p,T)(r) genau den vorschriftsgemäßen Wert M hat, und
- durch ein Verfahren insbesondere vom Typ *Regelung oder Servomotor* der Wert des Aktionsparameters (r) an diesen Pegel (ggf. mehrfach) angepasst wird;

so dass

- die beobachteten Abweichungen zwischen der Verteilung der realen Wahrscheinlichkeit der Zufälligkeit ($X_1$, ..., $X_N$) und derjenigen der während der Periode der historischen Aufzeichnung der Daten genommenen Werte korrigiert werden,
- wenn bestimmte Ereignisse (mit schwerwiegenden Folgen und deren Wahrscheinlichkeit nicht vernachlässigt werden kann) nicht in der Periode aufgetreten sind, in der dieser Ablauf aufgezeichnet wurde, dem Produktionskontrollautomatismus (3) trotzdem vorgeschrieben wird, sie zu berücksichtigen,
- wenn, durch ein Kompensationsphänomen, die Simulation eines präzisen katastrophalen Ereignisses keine große industrielle Wirkung erzeugen würde, mit Hilfe der Simulation von Teilfamilien von Ereignissen diese zufällige Kompensation vermieden und die mit der Katastrophe verbundene reale Gefahr hervorgehoben wird.

FIG. 1

FIG. 2

**T**

**1**

**Bruit des machines**
$X = (X_1, ..., X_N)$

**Intensité de fonctionnement**
$r = (r_1, ..., r_n)$

**11**

Micros

◈

Niveau
d'enregistrement

Micro $i$

Volume de la
production

Saturation ou
claquage micros

Haut-
parleurs

⊗

Σ | Bruit enregistré
par les micros | × | Coefficients du
contrebruit | Haut-parleur $j$

Contrebruit à reproduire

Saturation ou
claquage HP

Oreilles des
opérateurs | ✕

Bruit résultant dans la
salle de machines

Opérateur $k$

**Bruit maximal
dans la salle
< Seuil autorisé**

**Production des
machines**

**FIG. 3**

**FIG. 4**

FIG. 5

FIG. 6

# EP 2 062 111 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- JP Morgan, RiskMetrics™ - Technical documents. Morgan Guaranty Trust Company, 1996
- CHASE MANHATTAN BANK N.A. Value at Risk, 1996
- **Esh ; Kieffer ; Lopez.** Value at Risk. DeBoeck
- Mastering Value at Risk. Pitman Publishing
- **Litterman ; Gimerlock.** The Practice of Risk Management. Euromoney Books, 1998
- Value at Risk : the New Benchmark for controlling Market Risk. Professional, 1997
- CAD. 15 Mars 1993
- Amendment to the Capital Accord to incorporate market risks. Janvier 1996